# EUROPÄISCHE PATENTANMELDUNG

(11) **EP 2 777 979 A2**
(43) Veröffentlichungstag der Anmeldung: **17.09.2014**
(21) Anmeldenummer: 14154650.7
(22) Anmeldetag: 11.02.2014
(51) Int. Cl.: B60L 11/18, B60L 3/00

(54) **Elektrisch eigensicheres Batteriemodul mit ultraschneller Entladeschaltung und Verfahren zur Überwachung eines Batteriemoduls**

(30) Priorität: 15.03.2013 DE 102013204510
(71) Anmelder: Robert Bosch GmbH, 70442 Stuttgart (DE); Samsung SDI Co., Ltd., Yongin-si Gyeonggi-do 446-577 (KR)
(72) Erfinder: Fink, Holger, 70567 Stuttgart (DE)
(74) Vertreter: Bee, Joachim

(57) **Zusammenfassung**

Es wird eine Batteriemodul (221) mit einer Batteriezellschaltung (226) mit mehreren Batteriezellen (21) und mit einer Überwachungs- und Ansteuerungseinheit (230) zur Überwachung des Funktionszustands des Batteriemoduls (221) offenbart, wobei das Batteriemodul (221) eine Koppeleinheit mit in Halbbrückenanordnung geschalteten Leistungshalbleitern (241, 242) zum Koppeln der Batteriezellschaltung (226) an Ausgangsterminals (224, 225) des Batteriemoduls (221) und eine mit der Batteriezellschaltung (226) gekoppelte Entladeschaltung (270) zum schnellen Entladen des Batteriemoduls umfasst, wobei die Koppeleinheit und die Entladeschaltung durch die Überwachungs- und Ansteuerungseinheit (230) ansteuerbar sind.

## Beschreibung

### Bereich der Erfindung

Die vorliegende Erfindung betrifft ein Batteriemodul mit einer Batteriezellschaltung mit mehreren Batteriezellen und mit einer Überwachungs- und Ansteuerungseinheit zur Überwachung des Funktionszustands des Batteriemoduls. Ferner betrifft die Erfindung ein Verfahren zum Überwachen eines Batteriemoduls mittels einer in dem Batteriemodul angeordneten Überwachungs- und Ansteuerungseinheit. Weiterhin betrifft die Erfindung ein Batteriesystem, das eine Batterie mit mindestens einem Batteriestrang, in dem mehrere Batteriemodule angeordnet sind, und ein Batteriemanagementsystem umfasst.

### Stand der Technik

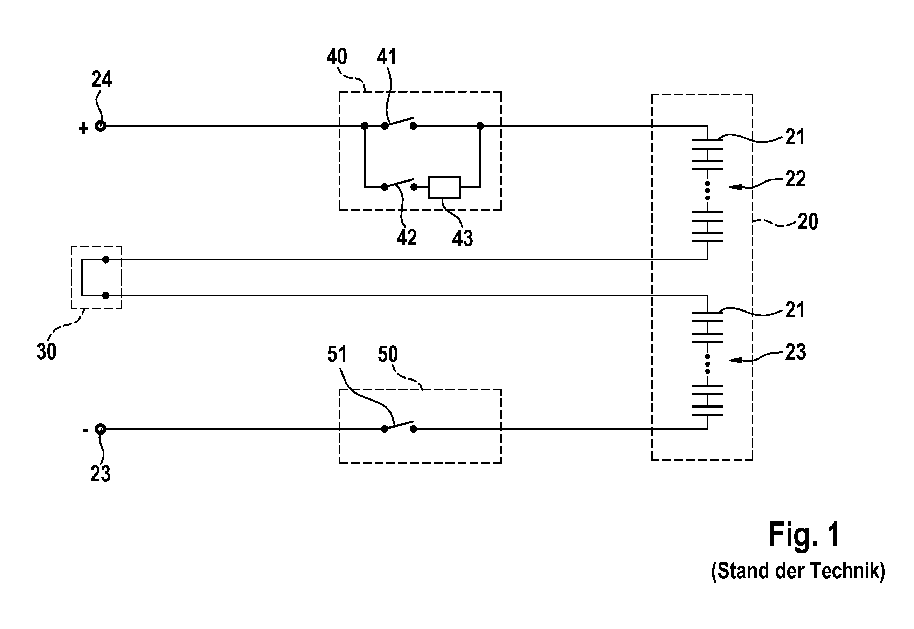

Es ist üblich, Batterien für den Einsatz in Hybrid- und Elektrofahrzeugen als Traktionsbatterien zu bezeichnen, da diese Batterien für die Speisung elektrischer Antriebe eingesetzt werden. Um die bei Hybrid- und Elektrofahrzeugen geforderten Leistungs- und Energiedaten zu erzielen, werden einzelne Batteriezellen in Serie und teilweise zusätzlich parallel geschaltet. Bei Elektrofahrzeugen werden häufig 10 Zellen oder mehr in Serie verschaltet und die Batterien weisen Spannungen bis zu 450 V auf. Auch bei Hybridfahrzeugen wird üblicherweise die Spanungsgrenze von 60 V überschritten, welche bei Berührung durch Menschen als unkritisch eingestuft wird. In der Figur 1 ist das Prinzipschaltbild eines Batteriesystems mit einer derartigen Traktionsbatterie 20 dargestellt. Die Batterie 20 umfasst mehrere Batteriezellen 21. Zur Vereinfachung der Darstellung in Figur 1 wurden nur zwei Batteriezellen mit dem Bezugszeichen 21 versehen. Traktionsbatterien in Hybrid- und Elektrofahrzeugen werden üblicherweise modular aufgebaut. Hierbei werden aus mindestens zwei einzelnen Batteriezellen 21, die seriell oder parallel miteinander verschaltet werden, Batteriemodule (in Figur 1 nicht gezeigt) gebildet.

Die Batterie 20 ist aus zwei Batteriezellschaltungen 22, 23 ausgebildet, die jeweils mehrere in Reihe geschaltete Batteriezellen 21 umfassen. Diese Batteriezellenschaltungen 22, 23 beziehungsweise Zellmodule sind jeweils mit einem Batterieterminal 24, 25 und mit einem Anschluss eines Servicesteckers 30 verbunden.

Das positive Batterieterminal 24 ist mit der Batterie 20 über eine Trenn- und Ladeeinrichtung 40 verbindbar, die einen Trennschalter 41 umfasst, der parallel zu einer Reihenschaltung aus einem Ladeschalter 42 und einem Ladewiderstand 43 geschaltet ist. Das negative Batterieterminal 25 ist mit der Batterie 20 über eine Trenneinrichtung 50 verbindbar, die einen weiteren Trennschalter 51 umfasst.

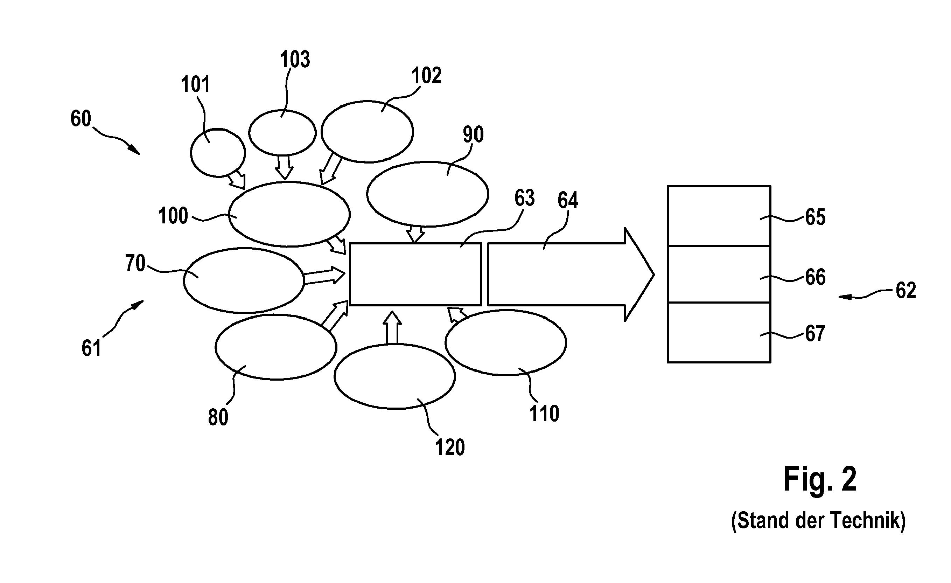

Ferner zeigt Figur 2 ein Diagramm 60, in dem verschiedene Fehlermechanismen 61 von Lithium-Ionen-Batterien und deren Konsequenzen 62 stark schematisiert darstellt werden. Diese dargestellten Fehlermechanismen 61 können zu einem durch eine unzulässige Temperaturerhöhung 63 hervorgerufenen thermischen Durchgehen (Thermal Runaway) 64 der Batteriezellen 21 führen. Bei Auftreten eines thermischen Durchgehens 64 kann es aufgrund einer Emission von Gas 65, die beispielsweise beim Öffnen eines Berstventils als Folge eines erhöhten Batteriezellinnendruckes auftreten kann, zu einem Brand der Batteriezellen 66 oder im Extremfall sogar zu einem Bersten 67 der Batteriezellen 21 kommen. Daher muss das Auftreten eines thermischen Durchgehens 64 bei dem Einsatz der Batteriezellen 21 in Traktionsbatterien mit höchster Wahrscheinlichkeit nahe 1 ausgeschlossen werden.

Ein thermisches Durchgehen 64 kann bei einem Überladen 70 einer Batteriezelle 21, als Folge einer Tiefentladung 80 einer Batteriezelle 21 während des anschließenden Ladevorganges oder bei Vorliegen von unzulässig hohen Lade- und Entladeströmen der Batteriezelle 21, die beispielsweise einem externen Kurzschlusses 90 entstehen können, auftreten. Ferner kann ein thermisches Durchgehen 64 auch bei Vorliegen eines batteriezellinternen Kurzschlusses 100 auftreten, der beispielsweise als Folge einer starken mechanischen Krafteinwirkung während eines Unfalls 101 oder als Folge der Bildung von batteriezellinternen Dendriten 102 entstehen kann, die beispielsweise bei Vorliegen von zu hohen Ladeströmen bei tiefen Temperaturen entstehen können. Weiterhin kann ein thermisches Durchgehen 64 auch als Folge von batteriezellinternen Kurzschlüssen auftreten, die durch bei der Fertigung entstehende Verunreinigungen der Batteriezellen 21, insbesondere durch in den Batteriezellen 21 vorhandenen metallischen Fremdpartikeln 103, verursacht werden können. Auch kann ein thermisches Durchgehen 64 bei Vorliegen einer unzulässigen Erwärmung der Batteriezellen 110, die beispielsweise als Folge eines Fahrzeugbrandes entstehen kann, oder bei Vorliegen einer Überlastung der Batteriezellen 120 auftreten.

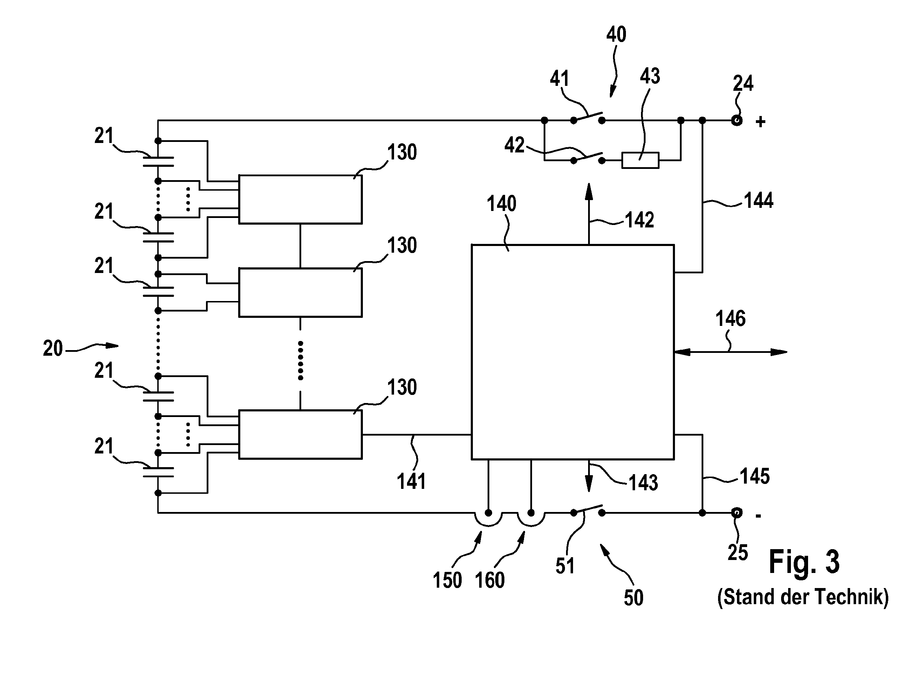

In der Figur 3 ist das Prinzipschaltbild eines aus dem Stand der Technik bekannten Batteriesystems dargestellt, das eine Traktionsbatterie 20 mit mehreren Batteriezellen 21 und ein Batteriemanagementsystem (BMS) umfasst. Die Elektronik des Batteriemanagementsystems weist eine dezentrale Architektur auf, bei der die aus der Zellüberwachungselektronik (CSC Elektronik) der Batteriezellen 21 ausgebildeten Überwachungs- und Ansteuerungseinheiten 130 als Satelliten ausgeführt sind, die jeweils zum Überwachen des Funktionszustandes einer oder mehrerer Batteriezellen 21 vorgesehen sind und über ein internes Bussystem 141 mit einem zentralen Batteriesteuergerät (BCU) 140 kommunizieren.

Die Elektronik des Batteriemanagementsystems, insbesondere die Überwachungselektronik der Batteriezellen 21, ist erforderlich, um die Batteriezellen 21 vor den kritischen, in Figur 2 dargestellten Zuständen zu schützen, die zu einem thermischen Durchgehen führen können. In der Elektronik des Batteriemanagementsystems wird ein hoher Aufwand betrieben, um zum einen die Batteriezellen 21 vor einer Überlastung durch externe Ursachen, wie beispielsweise durch einen Kurzschluss in dem Inverter eines Elektroantriebes, zu schützen, und zum anderen, um zu vermeiden, dass die Batteriezellen 21 durch eine Fehlfunktion der Elektronik des Batteriemanagementsystems, wie beispielsweise durch eine fehlerhafte Erfassung der Batteriezellspannungen durch die Überwachungs- und Ansteuerungseinheiten 130, gefährdet werden.

So wie bei dem in der Figur 1 dargestellten Batteriesystem ist bei dem in der Figur 3 dargestellten Batteriesystem die Traktionsbatterie über eine Trenn- und Ladeeinrichtung 40 mit einem positiven Batterieterminal 24 verbindbar und über eine Trenneinrichtung 50 mit einem negativen Batterieterminal 25 verbindbar. Dabei wurden zur Bezeichnung gleicher oder ähnlicher Komponenten für die in den Figuren 1 und 3 dargestellten Batteriesysteme jeweils die gleichen Bezugszeichen verwendet.

Ferner ist das zentrale Batteriesteuergerät 140 dazu ausgebildet, den Trennschalter (Relais) 41 und den Ladeschalter (Relais) 42 der Trenn- und Ladeeinrichtung 40 anzusteuern. Das Ansteuern des Trennschalters 41 und des Ladeschalters 42 mittels des Batteriesteuergeräts 140 wird in der Zeichnung mit dem Pfeil 142 symbolisiert. Auch ist das zentrale Batteriesteuergerät 140 dazu ausgebildet, den weiteren Trennschalter (Relais) 51 der Trenneinrichtung 50 anzusteuern. Das Ansteuern des Trennschalters 51 mittels des Batteriesteuergeräts 140 ist mit dem Pfeil 143 symbolisiert.

Das zentrale Batteriesteuergerät 140 ist über eine Hochvoltleitung 144, 145 mit einem jeweils anderen Batterieterminal 24, 25 verbunden. Ferner umfasst das zentrale Batteriesteuergerät 140 Stromsensoren 150, 160, die dazu vorgesehen sind, einen durch die Traktionsbatterie 20 fließenden Strom zu messen. Das Batteriesteuergerät 140 kommuniziert auch mit einer Fahrzeugschnittstelle (vehicle interface) über einen CAN-Bus 146. Über den CAN-Bus können dem Batteriesteuergerät 140 Informationen über den Funktionszustand des Fahrzeuges bereitgestellt werden.

Bei der Verwendung eines aus dem Stand der Technik bekannten Batteriesystems wird somit angestrebt, die Sicherheit des Batteriesystems so zu erhöhen, dass keine unzumutbare Gefährdung auftritt. Dabei werden gemäß der ISO 26262 hohe Anforderungen an die funktionale Sicherheit des Batteriemanagementsystems gestellt, da eine Fehlfunktion der Elektronik, wie oben bereits erläutert, zu einer Gefährdung führen kann. Ferner sind für Lithiumlonen-Batteriezellen Sicherheitstests vorgeschrieben. Um die Batteriezellen transportieren zu dürfen, müssen beispielsweise UN Transport-Tests durchgeführt werden. Die Testergebnisse müssen gemäß den EUCAR Gefahrenstufen beziehungsweise Gefahrenlevels (EUCAR Hazard Levels) bewertet werden. Die Batteriezellen 21 müssen dabei vorgegebene Mindestsicherheitslevels einhalten. Um dies zu erreichen, werden in den Batteriezellen, die für den Einsatz in Traktionsbatterien vorgesehen sind, umfangreiche Zusatzmaßnahmen getroffen.

Für Batteriemanagementsysteme für Batteriesysteme mit Traktionsbatterien 20 für Elektrofahrzeuge und Steckdosenhybride (Plug-in-Hybride) wird sich voraussichtlich eine Einstufung gemäß der Gefahrenstufe ASIL C etablieren, falls die Sicherheit der Batteriezellen 21 nicht signifikant erhöht werden kann. Solche Zusatzmaßnahmen werden dadurch getroffen, dass sogenannte Sicherheitsvorrichtungen (Safety Devices) in den Batteriezellen integriert werden. Dabei werden in den Batteriezellen typischerweise die im Folgenden angegebenen Sicherheitsvorrichtungen integriert.

In einer Batteriezelle wird eine Überladesicherheitsvorrichtung (Overcharge Safety Device) (OSD) integriert. Eine solche Überladesicherheitsvorrichtung bewirkt, dass die Batteriezelle bei einem Überladevorgang eine EUCAR Gefahrenstufe 4 nicht überschreitet. Der zulässige Bereich der Batteriezellspannung endet bei 4,2 V. Bei einem Überladevorgang baut die Batteriezelle ab einer Batteriezellspannung von etwa 5 V einen derart hohen Innendruck auf, das eine Membran der Überladesicherheitsvorrichtung nach außen gewölbt wird und die Batteriezelle elektrisch kurzgeschlossen wird. Als Folge davon wird die Batteriezelle solange entladen, bis eine batteriezellinterne Sicherung aktiviert wird. Der Kurzschluss der Batteriezelle zwischen den beiden Polen der Batteriezelle bleibt über die Überladesicherheitsvorrichtung erhalten.

Ferner wird eine Batteriezellsicherung (Cell Fuse) in die Batteriezelle integriert. Diese in der Batteriezelle integrierte Schmelzsicherung ist ein sehr wirksames Schutzinstrument auf Batteriezellebene, verursacht aber erhebliche Probleme beim Verbau der Batteriezellen in einer Serienschaltung eines Batteriemoduls beziehungsweise in einem Batteriesystem. Dort sind diese Maßnahmen eher kontraproduktiv.

In einer Batteriezelle wird auch eine Nageleindringsicherheitsvorrichtung (Nail Penetration Safety Device (NDS)) integriert. Eine Nageleindringsicherheitsvorrichtung schützt die Batteriezelle, indem beim Eindringen eines Nagels oder eines spitzen Gegenstandes in die Batteriezelle ein derart definierter Kurzschlusspfad aufgebaut wird, der nicht zu einer so starken lokalen Erwärmung der Batteriezelle im Bereich des Nageleintrittes führt, welche zu einem lokalen Schmelzen des vorhandenen Separators führen könnte.

In eine Batteriezelle wird auch eine Funktionssicherheitsschicht (Safety Function Layer (SFL)) integriert. Die Funktionssicherheitsschicht wird durch die keramische Beschichtung einer der beiden Elektroden der Batteriezelle, realisiert, vorzugsweise durch die keramische Beschichtung der Anode. Mittels der Funktionssicherheitsschicht kann bei einem Schmelzen des Separators ein flächiger Kurzschluss der Batteriezelle und damit eine extrem schnelle Umsetzung der elektrischen Energie der Batteriezelle in Verlustwärme verhindert werden.

In eine Batteriezelle wird ferner auch eine Stoßsicherheitsvorrichtung (Crush Safety Device) integriert. Die Stoßsicherheitsvorrichtung weist eine ähnliche Funktionsweise wie die Nageleindringsicherheitsvorrichtung auf. Bei einer starken mechanischen Deformation des Batteriezellgehäuses wird ein definierter Kurzschlusspfad in der Batteriezelle bereitgestellt, der eine starke lokale Erwärmung der Batteriezelle verhindert und dadurch die Sicherheit der Batteriezelle erhöht.

Bei den aktuell in Entwicklung befindlichen Batteriezellen sind insbesondere die Maßnahmen für die elektrische Sicherheit, die beispielsweise vor einem Überladen schützen oder einen Überstromschutz gewährleisten, mit erheblichem Aufwand verbunden. Diese Maßnahmen sind zudem nach dem Verbau einer Batteriezelle in ein Batteriemodul beziehungsweise in ein Batteriesystem tendenziell sogar eher kontraproduktiv anstatt sinnvoll. Beispielsweise kann bei einer Aktivierung der Schmelzsicherung einer Batteriezelle die Situation entstehen, dass die Elektronik des vorhandenen Batteriemanagementsystems (BMS) sehr hohen negativen Spannungen ausgesetzt wird. Dadurch entsteht auf Batteriesystemebene ein zusätzlicher Aufwand, da die Transportvorschriften auf Batteriezellenebene erfüllt werden müssen, ohne dass damit ein sonstiger Nutzen verbunden wäre.

### Offenbarung der Erfindung

Erfindungsgemäß wird ein Batteriemodul mit einer Batteriezellschaltung mit mehreren Batteriezellen und mit einer Überwachungs- und Ansteuerungseinheit zur Überwachung des Funktionszustands des Batteriemoduls zur Verfügung gestellt. Dabei weist das Batteriemodul eine Koppeleinheit mit in Halbbrückenanordnung geschalteten Leistungshalbleitern zum Koppeln der Batteriezellschaltung mit Ausgangsterminals des Batteriemoduls auf. Ferner weist das Batteriemodul eine mit der Batteriezellschaltung gekoppelte Entladeschaltung zum schnellen Entladen des Batteriemoduls auf. Die Koppeleinheit und die Entladeschaltung sind durch die Überwachungs- und Ansteuerungseinheit ansteuerbar.

Erfindungsgemäß wird auch ein Verfahren zum Überwachen eines Batteriemoduls mittels einer in dem Batteriemodul angeordneten Überwachungs- und Ansteuerungseinheit zur Verfügung gestellt. Das Batteriemodul wird mittels einer Koppeleinheit betrieben, die in Halbbrückenanordnung geschaltete Leistungshalbleiter zum Koppeln der Batteriezellschaltung des Batteriemodus an Ausgangsterminals des Batteriemoduls umfasst. Wenn beim Überwachen des Batteriemoduls durch die Überwachungs- und Ansteuerungseinheit eine Fehlersituation oder Gefahrsituation des Batteriemoduls feststellt wird, dann wird das Batteriemodul mittels der Koppeleinheit und/oder mittels einer mit der Batteriezellschaltung des Batteriemoduls gekoppelten und in dem Batteriemodul angeordneten Entladeschaltung, die zum schnellen Entladen des Batteriemodus vorgesehen ist, in einen sicheren Zustand versetzt.

Ferner wird weiterhin ein Batteriesystem zur Verfügung gestellt, dass eine Batterie mit mindestens einem Batteriestrang aufweist, in dem mehrere der erfindungsgemäßen Batteriemodule angeordnet sind. Dabei umfasst das Batteriesystem ein Batteriemanagementsystem, das dazu ausgebildet ist, mit den Überwachungs- und Ansteuerungseinheiten der Batteriemodule zu kommunizieren.

Die Unteransprüche zeigen bevorzugte Weiterbildungen der Erfindung.

Ein Vorteil der Erfindung ist, dass ein eigensicheres Batteriemodul zur Verfügung steht, wobei das Batteriemodul aufgrund der ansteuerbaren Koppelschaltung nicht nur besonders schonend betrieben werden kann und bei der ein drohender Schaden von dem Batteriemodul durch entsprechende Steuerung der Koppelschaltung verhindert werden kann. Darüber hinaus wird eine zusätzliche Sicherheitsfunktion bereitgestellt, indem durch die integrierte Entladeschaltung zum schnellen Entladen des Batteriemoduls ein interner Mechanismus geschaffen wird, mit dem unabhängig von an äußeren Kontaktierungen wie beispielsweise an den Ausgangsterminals des Batteriemoduls aufgeprägten Entlade- oder Ladeströmen stattdessen intern ein schnelles oder ultraschnelles Entladen, insbesondere in Gefahr- oder Notfallsituationen, durchgeführt werden kann.

Gemäß einer besonderen Ausführungsform der Erfindung kann die Koppeleinheit zwei Halbbrücken aufweisen, die jeweils einen mit einem Pluspol des Batteriezellschaltung gekoppelten ersten Leistungshalbleiter, einen mit einem Minuspol der Batterieschaltung gekoppelten zweiten Leistungshalbleiter und einen Mittelanschluss umfassen und über den jeweiligen Mittelanschluss mit einem jeweils anderen Ausgangsterminal des Batteriemoduls verbunden sind.

Dabei ist das Batteriemodul bevorzugt dazu eingerichtet, in einem Normalbetrieb die Koppeleinheit mittels Ansteuerung durch die Überwachungs- und Ansteuerungseinheit derartig zu betreiben, dass wahlweise eine Batteriemodulspannung in positiver oder negativer Orientierung oder keine Batteriezellspannung an den Ausgangsterminals des Batteriemoduls anliegt.

Anschaulich gesagt kann das Batteriemodul somit mit umpolbarer Ausgangsspannung ausgeführt sein. Genauer, das Batteriemodul kann bezüglich einer an seinen Ausgangsterminals bereitgestellten Ausgangsspannung umgepolt werden, so dass das Batteriemodul die Batteriemodulspannung in positiver oder negativer Orientierung abgeben kann.

Aufgrund der Funktionalität des erfindungsgemäßen Batteriemoduls, die Batteriemodulspannung umzupolen, eignet sich die erfindungsgemäße Batteriemodul insbesondere für den Einsatz in dreiphasigen Batteriesystemen mit stufig einstellbaren Ausgangsspannungen, die als Batteriedirektinverter bezeichnet werden, beziehungsweise allgemein in mehrphasigen Batteriesystemen mit stufig einstellbaren Ausgangsspannungen.

Bei einer bevorzugten Ausführungsform der Erfindung ist die erfindungsgemäße Überwachungs- und Ansteuerungseinheit dazu ausgebildet, bei Vorliegen einer Batteriezellspannung und/oder Batteriemodulspannung, deren Betrag einen ersten Spannungsgrenzwert überschreitet, und/oder bei Vorliegen einer Batteriezellspannung und/oder Batteriemodulspannung, deren Betrag einen zweiten Spannungsgrenzwert unterschreitet, die Leistungshalbleiter der Koppeleinheit in einen Schaltzustand zu versetzen, bei dem durch das Batteriemodul kein Strom fließt.

Dies kann dadurch erfolgen, dass mit Hilfe der Halbbrücken das Batteriemodul in einen sicheren Zustand versetzt wird, indem ein erster Leistungshalbleiter der Halbbrücke eingeschaltet wird, so dass ein erstes Ausgangsterminal und ein zweites Ausgangsterminal des Batteriemoduls leitend verbunden werden, und ein zweiter Leistungshalbleiter derselben Halbbrücke ausgeschaltet wird. Ferner, bei Verwendung einer Koppeleinheit aus zwei, insbesondere eine Vollbrücke bildenden, Halbbrücken, können jeweils zwei mit dem ersten Ausgangsterminal verbundene Leistungshalbleiter oder zwei mit dem zweiten Ausgangsterminal verbundene Leistungshalbleiter eingeschaltet werden.

Dies hat den Vorteil, dass die Überwachungs- und Ansteuerungseinheit eine drohende Überladung des im Normalbetrieb arbeitenden Batteriemoduls anhand einer Überschreitung eines ersten Grenzwertes der Batteriezellspannung oder Batteriemodulspannung erkennt, und das Batteriemodul dann günstigerweise nicht weiter aufgeladen und damit beispielsweise bei einer Fehlfunktion eines Batterieladegerätes sicher vor einer Überladung geschützt werden kann.

Ferner erkennt die Überwachungs- und Ansteuerungseinheit eine drohende Tiefentladung ausgehend von dem im Normalbetrieb arbeitenden Batteriemodul anhand einer Unterschreitung eines zweiten Grenzwertes einer Batteriezellspannung und/oder Batteriemodulspannung, woraufhin das Batteriemodul in einen sicheren Zustand überführt wird, bei dem kein Strom durch das Batteriemodul mehr fließt. Ein eventuell über ein gesamtes, das erfindungsgemäße Batteriemodul umfassendes Batteriesystems nach außen abgebbarer Strom fließt nur über die in dem Batteriemodul vorhandenen Leistungshalbleiter beziehungsweise Halbleiterschalter.

Bei einer weiteren bevorzugten Ausführungsform der Erfindung ist die erfindungsgemäße Überwachungs- und Ansteuerungseinheit auch dazu eingerichtet, bei Vorliegen eines Ladestroms, dessen Betrag einen vorgegebenen beziehungsweise geeignet gewählten Ladestromgrenzwert überschreitet und/oder bei Vorliegen eines (aufgeprägten äußeren) Entladestroms, dessen Betrag einen vorgegebenen beziehungsweise geeignet gewählten Ladestromgrenzwert überschreitet, die Leistungshalbleiter der Koppeleinheit in einen Schaltzustand zu versetzen, bei dem durch das Batteriemodul kein Strom fließt.

Somit erkennt die Überwachungs- und Ansteuerungseinheit ausgehend von dem im Normalbetrieb arbeitenden Batteriemodul eine drohende Überlastung durch zu hohe Entladeströme, die beispielsweise als Folge eines externen Kurzschlusses der Batterie durch einen Fehler im Inverter auftreten können. Dabei wird das Batteriemodul in einen sicheren Zustand überführt, in dem kein Strom durch das Batteriemodul fließt. Das Batteriemodul wird so vor einer Belastung mit unzulässig hohen Entladeströmen geschützt.

Ferner erkennt die Überwachungs- und Ansteuerungseinheit ausgehend von dem im Normalbetrieb arbeitenden Batteriemodul eine drohende Überlastung des Batteriemoduls durch zu hohe Ladeströme, wobei das Batteriemodul dann in den sicheren Zustand überführt wird, in dem kein Strom mehr durch das Batteriemodul fließt. Das Batteriemodul wird so vor einer Belastung mit unzulässig hohen Ladeströmen geschützt. Dies ist besonders vorteilhaft beispielsweise bei Vorliegen von sehr tiefen Temperaturen, bei denen die Batteriezellen der Batteriezellschaltung des Batteriemoduls besonders empfindlich hinsichtlich eines sich auf der Anode ausbildbareren Lithiumüberzugs (Lithium plating) sind.

Mit anderen Worten, es kann in einem Fall, in dem der Elektronik der Überwachungs- und Ansteuerungseinheit des erfindungsgemäßen eigensicheren Batteriemoduls durch ein Batteriemanagementsystem beispielsweise eine entsprechende Information darüber mitgeteilt wird, das das Fahrzeug, in dem das erfindungsgemäße Batteriesystem eingebaut ist, einen Unfall hatte, das Batteriemodul über eine oder gegebenenfalls beiden Halbbrücken, das heißt parallel über zwei Halbbrücken, entladen werden. Während der Entladung des Batteriemoduls über eine der Halbbrücken gibt das Batteriemodul an seinen Ausgangsterminals keine Spannung ab und wird günstigerweise trotzdem langsam entladen. Ein insbesondere als steuerbarer Widerstand betriebener Leistungshalbleiter wird hierbei inklusive seiner thermischen Anbindung und Kühlung entsprechend den Anforderungen ausgelegt.

Ferner ist gemäß einer weiteren, sehr vorteilhaften Ausführungsform der Erfindung die Überwachungs- und Ansteuerungseinheit ausgebildet, anhand einer Auswertung einer gemessenen Zelltemperatur und/oder Batteriemodultemperatur und/oder anhand einer Auswertung der Batteriezellspannungen beziehungsweise der Batteriemodulspannung das Vorliegen einer Gefahrsituation zu erkennen. Bei Auswertung der Zelltemperatur und/oder der Batteriemodulspannung kann eine Gefahrsituation insbesondere bei einer einen vorbestimmten Temperaturgrenzwert überschreitenden Zelltemperatur oder Batteriemodultemperatur und/oder einem Spannungseinbruch der Batteriemodulspannung erkannt werden. Die Gefahrsituation kann auch anhand insbesondere durch ein Batteriemanagementsystem kommunizierter Information erkannt werden.

Gemäß einer vorteilhaften Weiterbildung der Erfindung kann die Überwachungs- und Ansteuerungseinheit ferner dazu vorgesehen sein, bei Vorliegen der

Gefahrsituation zum Entladen des Batteriemoduls mittels mindestens einer der beiden Halbbrücken die Leistungshalbleiter der Koppeleinheit derartig anzusteuern, dass der erste oder der zweite Leistungshalbleiter einer Halbbrücke eingeschaltet ist und der zweite oder der erste Leistungshalbleiter derselben Halbbrücke im sogenannten aktiven Betrieb als steuerbarer Widerstand arbeitet, und bevorzugt der erste und der zweite Leistungshalbleiter der anderen Halbbrücke ausgeschaltet ist oder die ersten oder die zweiten Leistungshalbleiter der beiden Halbbrücken eingeschaltet sind und die zweiten oder die ersten Leistungshalbleiter der beiden Halbbrücken im aktiven Betrieb arbeiten.

Nach einer bevorzugten Ausführungsform der Erfindung wird, wenn die Gefahrsituation erkannt wird, die Entladeschaltung zum schnellen Entladen des Batteriemoduls aktiviert. Somit kann, wenn der Elektronik der Überwachungs- und Ansteuerungseinheit des erfindungsgemäßen eigensicheren Batteriemoduls von einem Batteriemanagementsystem mitgeteilt wird, dass das Fahrzeug, das mit dem erfindungsgemäßen Batteriesystem ausgestattet ist, einen Unfall hatte, die Batteriezelle über die Entladeschaltung, die im Folgenden auch als ultraschnelle Entladeschaltung (Ultra Fast Discharge Device) (UFDD) bezeichnet wird, schnellstmöglich entladen werden. Dadurch sind die realisierbaren Entladeströme insbesondere nicht aufgrund thermischer Verlustleistung begrenzt, die sich beispielsweise bei einem als steuerbaren Widerstand betriebenen Leistungshalbleiter ergibt beziehungsweise den Leistungshalbleitern im Dauerbetrieb auferlegt werden kann. Jedoch kann, um die Entladeschaltung zu unterstützen, das Batteriemodul in einer Gefahrsituation gleichzeitig über die Koppeleinheit entladen werden, wobei in einer in der Halbbrücken ein Leistungshalbleiter eingeschaltet und der andere Leistungshalbleiter in einem aktiven Betrieb als steuerbarer Widerstand betrieben wird.

Die Entladeschaltung kann eine Serienschaltung mit einem Widerstand und einem Leistungshalbleiter umfassen. Dabei kann die Entladeschaltung insbesondere einen Thyristor umfassen.

Ferner kann die Entladeschaltung eine Abtaktschaltung mit einem Abtaktschalter und einem Abtaktwiderstand umfasst.

Gemäß nach einem Aspekt der Erfindung können aufgrund der erfindungsgemäßen Erkennung einer Gefahrsituation vorteilhaft insbesondere auch das Durchführen eines Testvorganges, während dessen das Batteriemodul getestet wird, oder andere, für das Batteriemodul vergleichbare Situationen, zuverlässig erkannt werden.

Wird das erfindungsgemäße Batteriemodul beispielsweise im Rahmen eines UN Transport-Tests einem Nageleindringtest (Nail Penetration Test) oder einem Stoßtest (Crush Test) unterzogen, erkennt die Elektronik der erfindungsgemäßen Überwachungs- und Ansteuerungseinheit über die Auswertung einer Batteriezellspannung und/oder der Batteriemodulspannung, dass das Batteriemodul über Ströme entladen wird, ohne dass es betrieben wird. Die Erkennung dieses Vorganges kann beispielsweise über einen Spannungseinbruch des Batteriemoduls erfolgen. Als Folge davon wird sofort das Entladen des Batteriemoduls über die erfindungsgemäße Entladeschaltung ausgelöst, und das Batteriemodul wird dann im Wesentlichen über die Entladeschaltung entladen. Optional kann auch hier, wie bereits erläutert, eine Unterstützung der Entladung des Batteriemoduls über die beiden Halbbrücken erfolgen.

Wird das Batteriemodul einer starken Erwärmung ausgesetzt, so kann dies über die Elektronik der erfindungsgemäßen Überwachungs- und Ansteuerungseinheit erkannt werden. Als Folge davon wird sofort das Entladen des Batteriemoduls beispielsweise über die erfindungsgemäße Entladeschaltung ausgelöst und das Batteriemodul wird über die Entladeschaltung rechtzeitig entladen.

Das erfindungsgemäße elektrisch eigensichere Batteriemodul wird in Verbindung mit der in dem Batteriemodul angeordneten Koppeleinheit und der Überwachungs- und Ansteuerungseinheit so sicher ausgeführt, dass, im Vergleich zu einem herkömmlichen Batteriemanagementsystem, bei dem erfindungsgemäßen Batteriesystem nunmehr wesentlich geringere Anforderungen gestellt werden müssen. Darüber hinaus können zahlreiche bisher typischerweise durchgeführten, jedoch nicht zielführende Maßnahmen, wie beispielsweise das Ausstatten eines Batteriemoduls mit einer integrierten

Überladesicherheitsvorrichtung und/oder einer integrierten Batteriezellsicherung, entfallen.

Zusammenfassend kann das erfindungsgemäße elektrisch eigensichere Batteriemodul in Verbindung mit der Koppeleinheit, der Entladeschaltung (ultraschnelle Entladeschaltung), und Überwachungs- und Ansteuerungseinheit so sicher ausgeführt werden, dass, im Vergleich zum Stand der Technik, an ein Batteriemanagementsystem nunmehr wesentlich geringere Anforderungen gestellt werden können.

Auch die in dem Batteriemodul durchgeführten Maßnahmen für die Erhöhung der Sicherheit bei Vorliegen von starken mechanischen Krafteinwirkungen, wie das Ausstatten eines Batteriemodus mit einer integrierten Nageleindringsicherheitsvorrichtung und/oder mit einer integrierten Stoßsicherheitsvorrichtung können entfallen beziehungsweise zumindest wesentlich einfacher realisiert werden, da die Anforderungen seitens des Batteriemoduls nunmehr wesentlich geringer sind. Es wird ermöglicht, dass auf das Batteriemodul und die darin angeordneten Batteriezellen der Batteriezellschaltung dabei starke mechanische Krafteinwirkungen, wie sie beispielsweise bei UN Transport-Tests simuliert werden, gefahrlos einwirken können. Dies betrifft insbesondere auch eine Penetration der Batteriezellen beziehungsweise des Batteriemoduls mit spitzen Gegenständen mittels eines Nageleindringtests und/oder eine starke Deformation einer Batteriezelle oder des Batteriemoduls mittels von Stößen hinsichtlich aller drei Raumachsen. Das Batteriemodul kann mittels der erfindungsgemäßen Überwachungs- und Ansteuerungseinheit sich selbst vor unzulässigen Betriebszuständen schützen, ohne dabei beispielsweise auf Sicherungsfunktionen der Elektronik eines Batteriemanagementsystems angewiesen zu sein.

Mit dem erfindungsgemäßen elektrisch eigensicheren Batteriemodul steht somit ein Grundbaustein zur Verfügung, aus dem sichere Batteriesysteme, insbesondere in Elektro- und Hybridfahrzeugen, aufgebaut werden können, dessen Sicherheit wesentlich höher als bei den aus dem Stand der Technik bekannten Batteriesystemen.

### Kurze Beschreibung der Zeichnungen

Nachfolgend werden Ausführungsbeispiele der Erfindung unter Bezugnahme auf die begleitende Zeichnung im Detail beschrieben. In den Zeichnungen ist:
- Figur 1: das Prinzipschaltbild eines aus dem Stand der Technik bekannten Batteriesystems mit einer Traktionsbatterie,
- Figur 2: ein Diagramm, dass die Fehlermechanismen einer aus dem Stand der Technik bekannten Lithium-Ionen-Batterie darstellt, die zu einem thermischen Durchgehen dieser Lithium-lonen-Batterie führen können,
- Figur 3: das Prinzipschaltbild eines aus dem Stand der Technik bekannten Batteriesystems mit einer aus mehreren Batteriezellen ausgebildeten Traktionsbatterie und einem Batteriemanagementsystem,
- Figur 4: das Prinzipschaltbild eines Batteriemoduls nach einer ersten Ausführungsform der Erfindung,
- Figur 5: das Prinzipschaltbild eines Batteriemoduls nach der ersten Ausführungsform der Erfindung, mit einer detaillierteren Ansicht der erfindungsgemäßen ultraschnellen Entladeschaltung,
- Figur 6: eine beispielhafte alternative Ausführungsform der erfindungsgemäßen ultraschnellen Entladeschaltung
- Figur 7: noch eine alternative Ausführungsform der erfindungsgemäßen ultraschnellen Entladeschaltung,
- Figur 8: das Prinzipschaltbild eines Batteriemoduls nach einer zweiten Ausführungsform der Erfindung,
- Figur 9: das Prinzipschaltbild eines Batteriemoduls nach einer dritten Ausführungsform der Erfindung, mit einer alternativen Topologie einer Zellüberwachungselektronik,
- Figur 10: das Prinzipschaltbild eines Batteriemoduls gemäß einer weiteren Ausführungsform der Erfindung, mit einer anderen alternativen Topologie der Zellüberwachungselektronik,
- Figur 11: das Prinzipschaltbild eines Batteriemoduls gemäß einer weiteren Ausführungsform der Erfindung, mit noch einer anderen alternativen Topologie einer der Zellüberwachungselektronik,
- Figur 12: das Prinzipschaltbild eines Batteriemoduls gemäß einer weiteren Ausführungsform der Erfindung, mit noch einer anderen alternativen Topologie der Zellüberwachungselektronik,
- Figur 13: das Prinzipschaltbild eines Batteriemoduls gemäß einer weiteren Ausführungsform der Erfindung, mit noch einer anderen alternativen Topologie einer der Zellüberwachungselektronik,
- Figur 14: das Prinzipschaltbild eines Batteriemoduls gemäß einer weiteren Ausführungsform der Erfindung, mit noch einer anderen alternativen Topologie einer der Zellüberwachungselektronik,
- Figur 15: ein Blockschaltbild, das die Struktur einer Batterie zeigt, deren Batteriezellen in Form der erfindungsgemäßen Batteriemodulen angeordnet sind, und
- Figur 16: das Prinzipschaltbild eines Batteriedirektinverters mit drei Batteriesträngen, in denen jeweils mehrere der erfindungsgemäßen Batteriemodulen seriell geschaltet sind.

### Ausführungsformen der Erfindung

In der nachfolgenden Ausführlichen Beschreibung werden gleiche Bezugszeichen für gleiche oder ähnliche Komponenten verwendet.

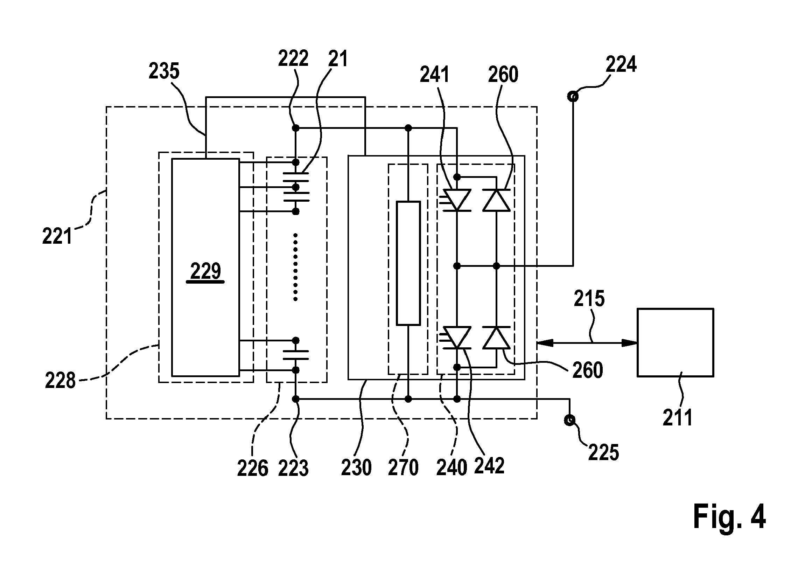

In der Figur 4 ist das Prinzipschaltbild eines Batteriemoduls 221 nach einer ersten Ausführungsform der Erfindung dargestellt. Das Batteriemodul 221 nach der ersten Ausführungsform der Erfindung umfasst eine Batteriezellschaltung 226 mit mehreren Batteriezellen 21. Die Batteriezellschaltung 226 ist hier eine Reihenschaltung, kann bei anderen Ausführungsformen der Erfindung aber auch eine Parallelschaltung oder eine Kombination aus einer Parallelschaltung und einer Reihenschaltung aufweisen. Die Batteriezellen sind mit einer Zellüberwachungselektronik (CSC) 228 verbunden, die zur Überwachung der einzelnen Batteriezellen 21 vorgesehen ist. Nach der hier gezeigten Ausführungsform ist die Zellüberwachungselektronik 228 durch eine zentrale Zellüberwachungselektronik implementiert, die mit allen Batteriezellen 21 verbunden ist und ferner insbesondere ein Zellbalancing steuern kann. und

Das Batteriemodul 221 weist ferner eine Koppeleinheit auf, die aus einer Halbbrücke 240 mit einem ersten und einem zweiten Leistungshalbleiter 241, 242 ausgebildet ist. Parallel zu den Leistungshalbleitern 241, 242 ist jeweils eine Diode 260 geschaltet, deren Durchlassrichtung entgegen der Durchlassrichtung des entsprechenden Leistungshalbleiters 241, 242 verläuft.

Die Halbbrücke 240 ist an einem ersten, dem ersten Leistungshalbleiter (der erste Leistungshalbleiterschalter der Halbbrücke aus der Figur 4) 241 zugeordneten Anschluss dem einem Pluspol 222 der Batteriezellschaltung 226 und an einem zweiten, dem zweiten Leistungshalbleiter 242 (der zweite Leistungshalbleiterschalter der Halbbrücke aus der Figur 4) zugeordneten Anschluss mit dem Minuspol 223 der Batteriezellschaltung 226 verbunden. Die Halbbrücke 240 ist ferner an einem Mittelanschluss mit einem ersten Ausgangsterminal 224 des Batteriemoduls 221 verbunden.

Das erfindungsgemäße Batteriemodul 221 umfasst ferner eine zu der Batteriezellschaltung 226 parallel geschaltete Überwachungs- und Ansteuerungseinheit 230 zum Überwachen des Funktionszustandes der Batteriezellen 21 beziehungsweise des Batteriemoduls 221. Die Überwachungs- und Ansteuerungseinheit 230 ist erfindungsgemäß mit einer integrierten Ansteuerung für die Leistungshalbleiter 241, 242 eingerichtet.

In der Figur 4 ist auch ein Batteriemanagementsystem 211 für ein Batteriesystem mit mehreren erfindungsgemäßen Batteriemodulen 221 dargestellt. Das Batteriemanagementsystem 211 ist dazu ausgebildet, mit der Überwachungs- und Ansteuerungseinheit 230 zu kommunizieren beziehungsweise Informationen auszutauschen. Der Informationenaustausch zwischen dem Batteriemanagementsystem 211 und der Überwachungs- und Ansteuerungseinheit 20 ist mittels des Doppelpfeiles 215 symbolisiert.

Ferner kommuniziert die Überwachungs- und Ansteuerungseinheit 230 mit der Zellüberwachungselektronik 228, die als eine zentrale Zellüberwachungselektronik 229 für sämtliche der Batteriezellen 228 ausgestaltet ist. Die Kommunikation 235 kann beispielsweise über einen Bus erfolgen, insbesondere über einen drahtgebundenen Bus, beispielsweise ein CAN-Bus oder über FlexRay. Jedoch ist die Erfindung nicht auf einen drahtgebundenen Bus beschränkt. Wenn daher im Folgenden von einem (drahtgebundenen) Bus die Rede ist, kann die Kommunikation in vielen Fällen stattdessen auch über drahtlose Verbindungen, wie beispielsweise Bluetooth, erfolgen. Somit werden der Überwachungs- und Ansteuerungselektronik 230 von der zentralen Zellüberwachungselektronik 229 insbesondere Spannungs- und/oder Strommesswerte übermittelt, die von der Überwachungs- und Ansteuerungseinheit 230 für eine Sicherheitsüberwachung weiterverarbeitet werden, wie im Folgenden dargestellt wird.

Erkennt die Überwachungs- und Ansteuerungseinheit 230 ausgehend vom Normalbetrieb des Batteriemoduls 221 eine drohende Überladung des Batteriemoduls 21 anhand einer Überschreitung eines ersten Grenzwertes einer Batteriezellspannung und/oder der Batteriemodulspannung, wird der erste Leistungshalbleiter 241 der Halbbrücke 240 ausgeschaltet und der zweite Leistungshalbleiter 242 wird eingeschaltet. Da die Batteriemodulspannung sich innerhalb des Bereichs U_{min_modul} und U_{max_modul} befindet, sperrt die Diode 260 des ersten Leistungshalbleiters 241 auch bei drohender Überladung, beispielsweise bei einer Fehlfunktion beim Laden der Batterie beziehungsweise des Batteriemoduls 221. Dadurch kann eine weitere Aufladung des Batteriemoduls 221 sicher verhindert werden.

Erkennt die Überwachungs- und Ansteuerungseinheit 230 ausgehend vom Normalbetrieb des Batteriemoduls 221 eine drohende Tiefentladung des Batteriemoduls 221 anhand einer Unterschreitung eines zweiten Grenzwertes einer Batteriezellspannung und/oder der Batteriemodulspannung, wird der erste Leistungshalbleiter 241 der Halbbrücke 240 ausgeschaltet und der zweite Leistungshalbleiter 242 wird eingeschaltet. Es fließt dann kein Strom mehr durch das Batteriemodul 221. Ein eventuell über ein gesamtes Batteriesystem, in dem die erfindungsgemäße Batteriemodul 221 angeordnet ist, nach außen abgegebener Strom fließt in dem erfindungsgemäßen Batteriemodul 221 nur über den Leistungshalbleiter (Halbleiterschalter) 241 der Koppeleinheit des Batteriemoduls 221.

Erkennt die Überwachungs- und Ansteuerungseinheit 230 ausgehend vom Normalbetrieb des Batteriemoduls 221 eine drohende Überlastung des Batteriemoduls 221 durch zu hohe Entladeströme, die beispielsweise als Folge eines externen Kurzschlusses der Batterie durch einen Fehler im Inverter auftreten können, wird der erste Leistungshalbleiter 241 der Halbbrücke 240 ausgeschaltet und der zweite Leistungshalbleiter 242 wird eingeschaltet. Es fließt dann kein Strom mehr durch das Batteriemodul 221. Das Batteriemodul 221 wird so vor einer Belastung mit unzulässig hohen Entladeströmen geschützt.

Erkennt die Überwachungs- und Ansteuerungseinheit 230 ausgehend vom Normalbetrieb des Batteriemoduls 221 eine drohende Überlastung des Batteriemoduls 221 durch zu hohe Ladeströme beispielsweise bei sehr tiefen Temperaturen, bei denen die Batteriezellen 21 der Batteriezellschaltung 226 besonders empfindlich hinsichtlich einem sich insbesondere auf der Anode ausbildbareren Lithiumüberzugs ist, wird mittels der Überwachungs- und Ansteuerungseinheit 230 der erste Leistungshalbleiter 241 der Halbbrücke 240 ausgeschaltet und der zweite Leistungshalbleiter 242 wird eingeschaltet. Es fließt dann kein Strom mehr durch das Batteriemodul 221. Das Batteriemodul 221 wird so vor einer Belastung mit unzulässig hohen Ladeströmen geschützt.

Wird der Überwachungs- und Ansteuerungseinheit 230 des erfindungsgemäßen eigensicheren Batteriemoduls 221 beispielsweise in einem Fahrzeug von einem Batteriemanagementsystem 211 mitgeteilt, dass das Fahrzeug einen Unfall hatte, kann das Batteriemodul 221 über die Halbbrücke 240 entladen werden. Dazu wird der zweite Leistungshalbleiter 242 eingeschaltet und der erste Leistungshalbleiter 241 im sogenannten aktiven Betrieb als steuerbarer Widerstand betrieben. Die Batteriemodul 221 gibt an seinen Ausgangsterminals 224, 225 dann keine Spannung ab und wird trotzdem langsam entladen. Die realisierbaren Entladeströme sind begrenzt durch die thermische Verlustleistung, die dem als steuerbarer Widerstand betriebenen Leistungshalbleiter 241 im Dauerbetrieb auferlegt werden kann. Ein insbesondere als steuerbarer Widerstand betriebener Leistungshalbleiter 241 inklusive seiner thermische Anbindung und Kühlung wird daher entsprechend den Anforderungen ausgelegt werden.

Das Batteriemodul 221 nach der ersten Ausführungsform der Erfindung umfasst ferner noch eine Entladeschaltung 270 als eine ultraschnelle Entladeschaltung (Ultra Fast Discharge Device) (UFDD). Die Entladeschaltung 270 ist in dem Batteriemodul 221 zum Entladen der Batteriezellen 21 mittels eines durch die Entladeschaltung 270 fließenden Entladestromes vorgesehen. Wird der Überwachungs- und Ansteuerungseinheit 230 des erfindungsgemäßen eigensicheren Batteriemoduls 221 von einem Batteriemanagementsystem 211, das in einem Batteriesystem mit mehreren solchen Batteriemodulen 221 angeordnet ist, mitgeteilt, dass das Fahrzeug, in dem das erfindungsgemäße Batteriesystem angeordnet ist, einen Unfall hatte, wird das Batteriemodul 221 über die Entladeschaltung 270 schnell entladen. Um die Entladeschaltung 270 zu unterstützen, kann das Batteriemodul 221 gleichzeitig auch über die Halbbrücke 240 entladen werden. Um die Entladeschaltung 270 zu unterstützen, wird somit mittels der Überwachungs- und Ansteuerungseinheit 230 der zweite Leistungshalbleiter 242 der Halbbrücke 240 eingeschaltet. Das Batteriemodul 221 gibt dann an seinen Klemmen beziehungsweise Ausgangsterminals 224, 225 während der Entladung keine Spannung ab. Die Entladeschaltung 270 kann so ausgelegt sein, dass das Batteriemodul 221 mit sehr großen Entladeströmen nahe dem Kurzschluss entladen werden kann. Das Batteriemodul 221 wird damit sehr schnell in einen sicheren Zustand gebracht. Damit können auf Fahrzeugebene Situationen beherrscht werden, bei denen das Batteriemodul 221 mechanisch stark deformiert oder durch spitze Gegenstände penetriert wird. Dabei kann unterstützend mittels der Überwachungs- und Ansteuerungseinheit 230 auch der erste Leistungshalbleiter 241 im aktiven Betrieb als steuerbarer Widerstand betrieben werden.

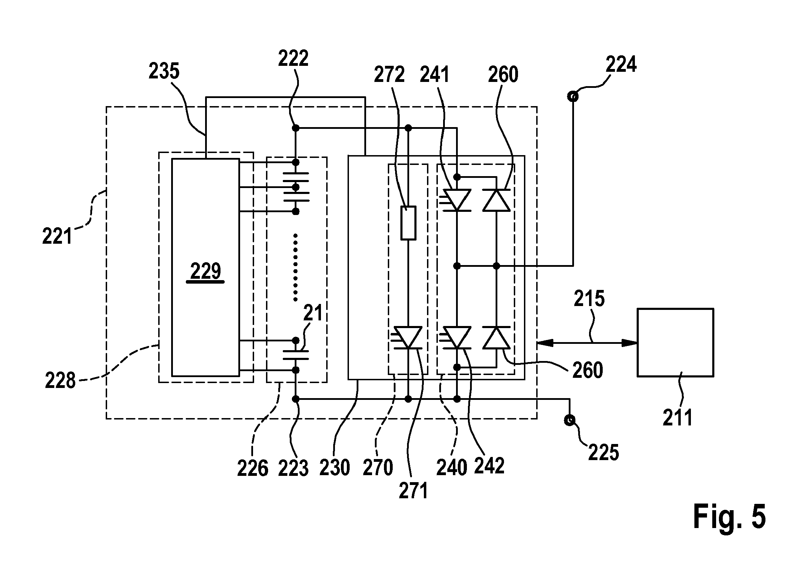

In der Figur 5 ist die erfindungsgemäße Batteriemodul 221 nach einer zweiten Ausführungsform der Erfindung gezeigt. Im Unterschied zu der in Figur 1 gezeigten allgemeinen Darstellung ist in Figur 5 insbesondere die Entladeschaltung (UFDD) 270 detaillierter dargestellt und umfasst hier eine zwischen dem Pluspol 222 und dem Minuspol 223 der Batteriezellschaltung 226 angeschlossene Serienschaltung aus einem Leistungshalbleiter 271 und einem Widerstand 272.

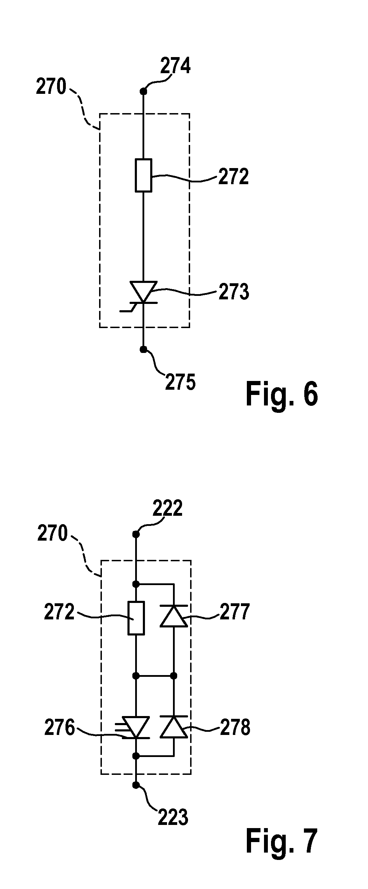

Die Erfindung ist aber nicht auf eine bestimmte Ausführungsform der (ultraschnellen) Entladeschaltung 270 beschränkt. So werden in den Figuren 6 und 7 weitere beispielhafte Ausführungsformen der ultraschnellen Entladeschaltung (UFDD) 270 gezeigt. Die Entladeschaltung 270 ist eine der wesentlichen Funktionseinheiten, um ein eigensicheres Batteriemodul 221 zu erhalten, und mit der das Batteriemodul 221 durch Entladung schnell in einen sicheren Zustand gebracht werden soll. In der Figur 6 wird eine Realisierung der Entladeschaltung 270 dargestellt, welche auf dem Einsatz eines (Kurzschluss-)Thyristors 273 beruht. Thyristoren zeichnen sich durch außergewöhnliche Robustheit und Stromtragfähigkeit aus und sind daher für den hier vorliegenden Anwendungsfall geeignete Halbleiterbauelemente. Eventuelle mit dem Einsatz des Thyristors 273 verbundene Nachteile speziell hinsichtlich des Ein- und Ausschaltverhaltens kommen in der vorliegenden Anwendung nicht zum Tragen. Wie in der Figur 6 gezeigt, umfasst die dortige Realisierung der ultraschnellen Entladeschaltung 270 eine Serienschaltung eines ohmschen Widerstandes 272 und eines Kurzschlussthyristors 273. Der ohmsche Widerstand 272 kann dabei entweder über die Leitungswiderstände und die Kontaktwiderstände 274, 275 des Kurzschlusskreises oder aber über ein dezidiertes Bauelement realisiert werden. Der ohmsche Widerstand 272 limitiert zusammen mit dem Innenwiderstand der Batteriezellen 21 den Kurzschlussstrom bei der Schnellentladung des Batteriemoduls 221.

In der Figur 7 wird eine andere Ausführungsform der ultraschnellen Entladeschaltung 270 gezeigt, die auf einen Abtakter beziehungsweise eine Abtaktschaltung basiert. Der Abtakter kann auf Basis eines ein- und ausschaltbaren elektronischen Halbleiterventils 276 und einem Abtaktwiderstand 272 aufgebaut werden, wobei das Halbleiterventil 276 von der erfindungsgemäßen Überwachungs- und Ansteuerungseinheit 230 angesteuert wurde. Der ohmsche Widerstand des Abtaktwiderstandes 272 limitiert zusammen mit dem Innenwiderstand des Batteriemoduls 221 beziehungsweise der Batteriezellen 21 den maximalen Entladestrom bei der Schnellentladung des Batteriemoduls 221. Für den ein- und ausschaltbaren elektronischen Halbleiterschalter 276 eignen sich insbesondere Weise MOSFETs, da diese aufgrund der geringen Anforderungen an die Sperrspannung mit sehr geringem Einschaltwiderstand realisiert werden können. Eine Energieentnahme aus dem Batteriemodul 221 kann über die Abtaktschaltung kontrolliert werden. So kann beispielsweise zu Beginn der Entladung mit dauernd eingeschaltetem Abtakter schnell Energie aus dem Batteriemodul 221 entnommen werden. Bei Erwärmung des Abtaktwiderstands 272 und des Abtaktschalters 276 kann dann in einen gepulsten Betrieb oder in einen Blockbetrieb gewechselt werden. Ferner sind in der Figur 7 noch parallel geschaltete Inversdioden 277, 278 dargestellt.

Zusammenfassend kann somit die erfindungsgemäße ultraschnelle Entladeschaltung 270 für die Realisierung eines eigensicheren Batteriemoduls 221 eingesetzt werden. Außerdem kann, wie oben bereits erläutert, mittels der erfindungsgemäßen Halbbrückenschaltung 240 das Batteriemodul 221 gegen Überladung, Tiefentladung und Überlastung durch zu hohe Lade- und Entladeströme gesichert werden. Die Grenzwerte für die elektrische Sicherheit können dabei dynamisch, beispielsweise in Abhängigkeit von der Temperatur der Batteriezelle 21, angepasst werden. Das Batteriemodul 221 ist ferner auch bei starken mechanischen Krafteinwirkungen eigensicher, wie sie beispielsweise bei einem Unfall auftreten können. Hierzu wird das Batteriemodul 221 bei Erkennung eines kritischen Zustands über die Entladeschaltung 270 schnellstmöglich entladen. Das Batteriemodul 221 ist somit bei starker Erwärmung eigensicher. Hierzu wird das Batteriemodul 221 bei Erkennung eines kritischen Zustands über die Entladeschaltung 270 schnellstmöglich entladen. Die Auslegung der Entladeschaltung 270 kann so erfolgen, dass der Entladestrom einen für das Batteriemodul 221 maximal zulässigen, maximalen Kurzschlussstrom nicht übersteigt.

Bei den gemäß heutigem Stand der Technik eingesetzten, in Batteriemodulen integrierten Safety Devices, ist der sich einstellende Kurzschlussstrompfad von den spezifischen Verhältnissen abhängig. Daher kann das Verhalten eines Batteriemoduls nicht genau vorhergesagt werden und ist auch nicht reproduzierbar. Dieser Nachteil kann mit der hier vorgestellten Entladeschaltung vermieden werden. Dabei kann die Spannung des Batteriemoduls 221 über die Halbbrücke 240 genau vorgegeben werden. Wird bei Aktivierung der Entladeschaltung 270 automatisch auch der zweite Leistungshalbleiter 242 der Halbbrücke 240 eingeschaltet, weist das eigensichere Batteriemodul 221 an seinen Ausgangsterminals 224, 225 die Spannung 0V auf, während die Schnellentladung über die Entladeschaltung 270 erfolgt.

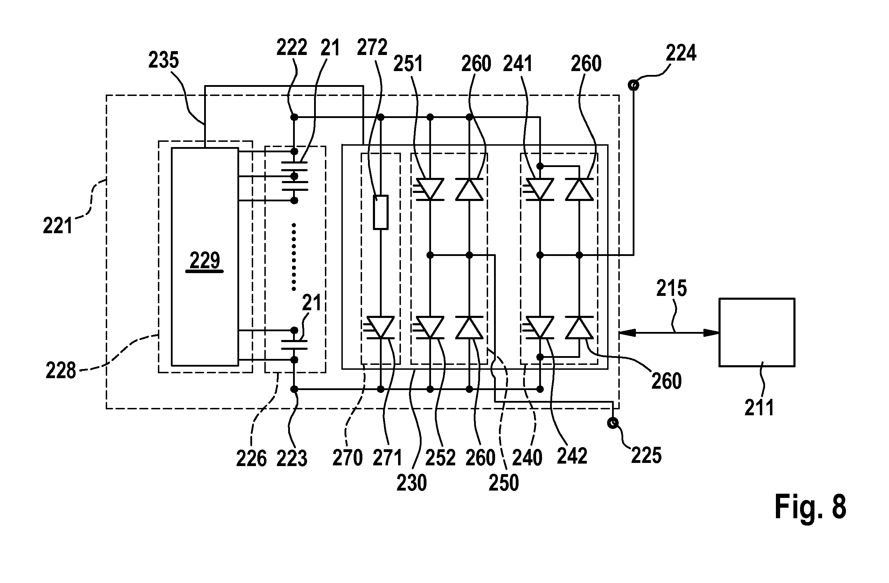

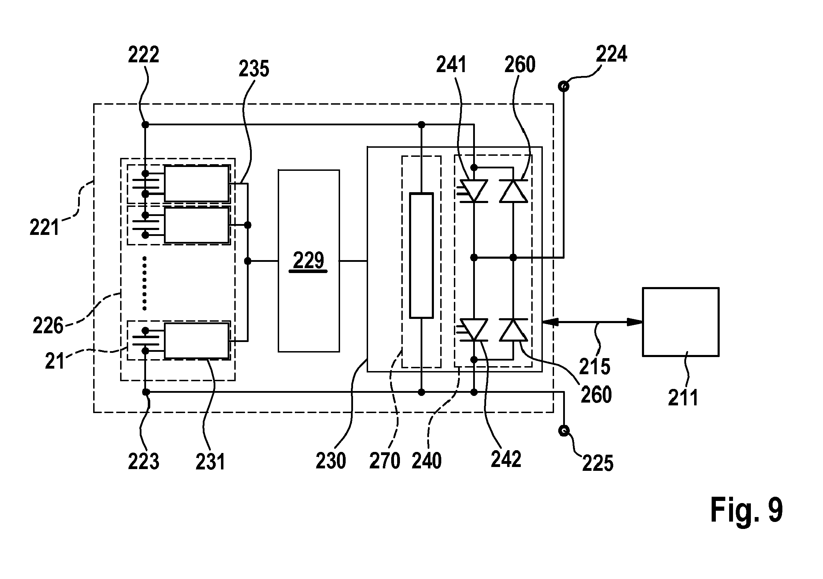

In der Figur 8 ist das Prinzipschaltbild eines Batteriemoduls 221 nach einer weiteren Ausführungsform der Erfindung dargestellt. Im Unterschied zu der Ausführungsform nach Figur 4 weist das Batteriemodul 221 hier zwei Halbbrücken 240, 250 auf. Genauer gesagt umfasst das Batteriemodul 221 nach Figur 8 eine Batteriezellschaltung 226 und eine Koppeleinheit, die aus einer ersten Halbbrücke (die rechte Halbbrücke aus der Figur 9) 240 mit einem ersten und einem zweiten Leistungshalbleiter 241, 242 und einer zweiten Halbbrücke (die linke Halbbrücke aus der Figur 9) 250 mit einem ersten und einem zweiten Leistungshalbleiter 251, 252 ausgebildet ist. Die beiden Halbbrücken 240, 250 bilden zusammen eine Vollbrücke mit vier Leistungshalbleitern 241, 242, 251, 252. Parallel zu den Leistungshalbleitern 241, 242, 251, 252 ist jeweils eine Diode 260 geschaltet, deren Durchlassrichtung entgegen der Durchlassrichtung des entsprechenden Leistungshalbleiters 241, 242, 251, 252 verläuft.

Die erste Halbbrücke 240 ist an einem ersten, dem ersten Leistungshalbleiter (der erste Leistungshalbleiterschalter der rechten Halbbrücke aus der Figur 9) 241 zugeordneten Anschluss mit einem Pluspol 222 der Batteriezellschaltung 226 und an einem zweiten, dem zweiten Leistungshalbleiter 242 (der zweite Leistungshalbleiterschalter der rechten Halbbrücke aus der Figur 9) zugeordneten Anschluss mit dem Minuspol 223 der Batteriezellschaltung 226 verbunden. Die erste Halbbrücke 240 ist ferner an einem Mittelanschluss mit einem ersten Ausgangsterminal 224 des Batteriemoduls 221 verbunden.

Die zweite Halbbrücke 250 ist an einem ersten, dem ersten Leistungshalbleiter (der erste Leistungshalbleiterschalter der linken Halbbrücke aus der Figur 9) 251 zugeordneten Anschluss mit dem Pluspol 222 des Batteriezellschaltung 226 und an einem zweiten, dem zweiten Leistungshalbleiter (der zweite Leistungshalbleiterschalter der linken Halbbrücke aus der Figur 9) 252 zugeordneten Anschluss mit dem Minuspol 223 der Batteriezellschaltung 226 verbunden. Die zweite Halbbrücke 250 ist ferner an einem Mittelanschluss mit einem zweiten Ausgangsterminal 225 des Batteriemoduls 221 verbunden.

Die Sicherheitsfunktionen der Vollbrücke nach Figur 8 sind ähnlich zu der der Halbbrücke nach Figur 4. Aufgrund der Vollbrückenanordnung können die Leistungshalbleiter 241, 242, 251, 252 mittels der erfindungsgemäßen Überwachungs- und Ansteuerungseinheit 230 jedoch derartig angesteuert werden, dass wenn im Normalbetrieb des Batteriemoduls 221 die Batteriemodulspannung an die Ausgangsterminals 224, 225 in positiver Orientierung (+U_{Batteriemodul}) abgeben soll, der erste Leistungshalbleiter 241 der ersten Halbbrücke 240 sowie der zweite Leistungshalbleiter 252 der zweiten Halbbrücke 250 eingeschaltet und die anderen zwei Leistungshalbleiter 242, 251 ausgeschaltet sind.

Ferner können die Leistungshalbleiter 241, 242, 251, 252 mittels der erfindungsgemäßen Überwachungs- und Ansteuerungseinheit 230 derartig angesteuert werden, dass wenn im Normalbetrieb das Batteriemodul 226 die Batteriemodulspannung an den Ausgangsterminals 224, 225 in negativer Orientierung (-U_{Batteriemodul}) abgeben soll, der zweite Leistungshalbleiter 242 der ersten Halbbrücke 240 sowie der erste Leistungshalbleiter 251 der zweiten Halbbrücke 250 eingeschaltet und die anderen beiden Leistungshalbleiter 241, 252 ausgeschaltet sind.

Die Leistungshalbleiter 241, 242, 251, 252 können mittels der erfindungsgemäßen Überwachungs- und Ansteuerungseinheit 230 ferner derartig angesteuert werden, dass im Normalbetrieb des Batteriemoduls 221 optional auch ein Funktionszustand des Batteriemoduls 221 einstellbar ist, in dem das Batteriemodul 221 keine Ausgangsspannung abgibt. In diesem Zustand sind entweder die ersten Leistungshalbleiter 241, 251 der beiden Halbbrücken 240, 250 eingeschaltet und die anderen beiden Leistungshalbleiter 242, 252 ausgeschaltet oder die zweiten Leistungshalbleiter 242, 252 der beiden Halbbrücken 240, 250 eingeschaltet und die anderen beiden Leistungshalbleiter 241, 251 ausgeschaltet.

Erkennt die Überwachungs- und Ansteuerungseinheit 230 ausgehend vom Normalbetrieb des Batteriemoduls 221 eine drohende Überladung des Batteriemodus 221 anhand einer Überschreitung eines ersten Spannungsgrenzwertes oder eine Batteriezellenspannung und/oder Batteriemodulspannung, deren Betrag einen zweiten Spannungsgrenzwert unterschreitet, und/oder einen Ladestrom, dessen Betrag einen vorbestimmten Ladestromgrenzwert überschreitet, und/oder einen Entladestrom, dessen Betrag einen vorbestimmten Entladestromgrenzwert überschreitet, so werden die Leistungshalbleiter 241, 242, 251, 252 der Koppeleinheit in einen Schaltzustand versetzt, bei dem durch die Batteriezelle kein Strom fließt. Dies kann dadurch erreicht werden, indem entweder die ersten Leistungshalbleiter 241, 251 der beiden Halbbrücken 240, 250 eingeschaltet und die anderen beiden Leistungshalbleiter 242, 252 ausgeschaltet oder alternativ die zweiten Leistungshalbleiter 242, 252 der beiden Halbbrücken 240, 250 eingeschaltet und die anderen beiden Leistungshalbleiter 241, 242 ausgeschaltet werden.

Analog kann bei der zweiten Ausführungsform der Erfindung, wenn der Überwachungs- und Ansteuerungseinheit 230 des erfindungsgemäßen eigensicheren Batteriemoduls 221 beispielsweise in einem Fahrzeug von einem Batteriemanagementsystem 211 mitgeteilt wird, dass das Fahrzeug einen Unfall hatte, das Batteriemodul 221 über eine der beiden Halbbrücken 240, 250 oder auch über beide Halbbrücken 240, 250 parallel entladen werden, wobei bevorzugt zum Laden jedoch die ultraschnelle Entladeschaltung 270 verwendet wird.

Wird das Batteriemodul 221 beispielsweise im Rahmen von UN Transport-Tests einem Nageleindringtest (Nail Penetration Test) oder einem Stoßtest (Crush Test) unterzogen oder befindet sich in vergleichbaren Situationen, dann erkennt die Überwachungs- und Ansteuerungseinheit 230 über die Auswertung einer Batteriezellspannung und/oder der Batteriemodulspannung, dass das Batteriemodul 221 durch Ströme entladen wird, ohne dass es betrieben wird. Dies kann beispielsweise durch Erkennung eines Spannungseinbruchs des Batteriemoduls 221 erfolgen. Die Überwachungs- und Ansteuerungseinheit 230 löst dann sofort das Entladen des Batteriemoduls 221 über die erfindungsgemäße Entladeschaltung 270 aus, und das Batteriemodul 221 wird dann im Wesentlichen über die Entladeschaltung 270 entladen.

Wird das Batteriemodul 221 einer starken Erwärmung ausgesetzt, so kann dies von der Überwachungs- und Ansteuerungseinheit 230 erkannt werden. Da die Zeitkonstanten für die Erwärmung des Batteriemoduls 221 beziehungswiese der Batteriezellen 21 im Allgemeinen sehr groß sind, kann über die erfindungsgemäße Entladeschaltung 270 rechtzeitig eine Entladung des Batteriemoduls 221 herbeigeführt werden, bevor eine Batteriezelltemperatur und/oder eine Batteriemodultemperatur kritische Werte übersteigt. Optional kann eine Entladung des Batteriemoduls 221 auch über die beiden Halbbrücken 240, 250 erfolgen. Um die Entladeschaltung 270 zu unterstützen, werden mittels der Überwachungs- und Ansteuerungseinheit 230 insbesondere die beiden zweiten Leistungshalbleiter 242, 252 der beiden Halbbrücken 240, 250 eingeschaltet. Dadurch wird das Batteriemodul 221 wesentlich sicherer als gegenüber dem Stand der Technik.

Bei den hier vorgestellten, erfindungsgemäßen Batteriemodulen 221 bleibt die an den Ausgangsterminals 224, 225 anliegende Batteriemodulspannung bei der Aktivierung der Sicherheitsmaßnahmen, die über die Veränderung der Schaltzustände in den Hallbrücken 240, 250 geschehen, oder bei der Aktivierung der ultraschnellen Entladeschaltung (UFDD) 270, dem Betrag nach immer kleiner als die maximal zulässige Batteriemodulspannung von beispielsweise 4,2 V x n (n=Anzahl der Batteriezellen 21 in der Batteriezellschaltung 226 des Batteriemoduls 221). Dies stellt ebenfalls eine gegenüber dem heutigen Stand der Technik erhebliche Verbesserung dar, da ansonsten beispielsweise bei der Aktivierung einer batteriezellinternen Schmelzsicherung sehr hohe negative Spannungen, die bei Elektrofahrzeugbatterien bis zu -400 V betragen können, auftreten können, die der Elektronik eines Batteriemanagementsystems große Probleme bereiten.

In der Figur 9 wird das Prinzipschaltbild eines Batteriemoduls 221 nach einer anderen Ausführungsform der Erfindung gezeigt. Im Unterschied zu den in den Figuren 4, 5 und 8 gezeigten Ausführungsformen sind die Batteriezellen 21 hier jeweils mit einer eigenen Zellüberwachungselektronik 231 ausgestattet. Ferner ist, ähnlich wie bei den weiter oben diskutierten Ausführungsformen, auch eine zentrale Zellüberwachungselektronik 229 vorhanden, wobei jedoch einige Funktionen der Zellüberwachung statt in der zentralen Zellüberwachungselektronik 229 nunmehr in den einzelnen Batteriezellen 21 beziehungsweise in den entsprechenden Batteriezell-eigenen Zellüberwachungselektroniken 231 ausgeführt werden. Dazu kommuniziert die zentrale Zellüberwachungselektronik 229 mit den einzelnen Zellüberwachungselektroniken 231 in den Batteriezellen. Diese Kommunikation 235 kann mittels eines Busses erfolgen, an den sowohl die zentrale Zellüberwachungselektronik 229 als auch die Batteriezell-eigenen Zellüberwachungselektroniken 231 angeschlossen sind. Die erfindungsgemäße Überwachungs- und Ansteuerungseinheit 230 hingegen kommuniziert, ähnlich wie nach den Figuren 4, 5, und 8, mit der zentralen Zellüberwachungselektronik 229.

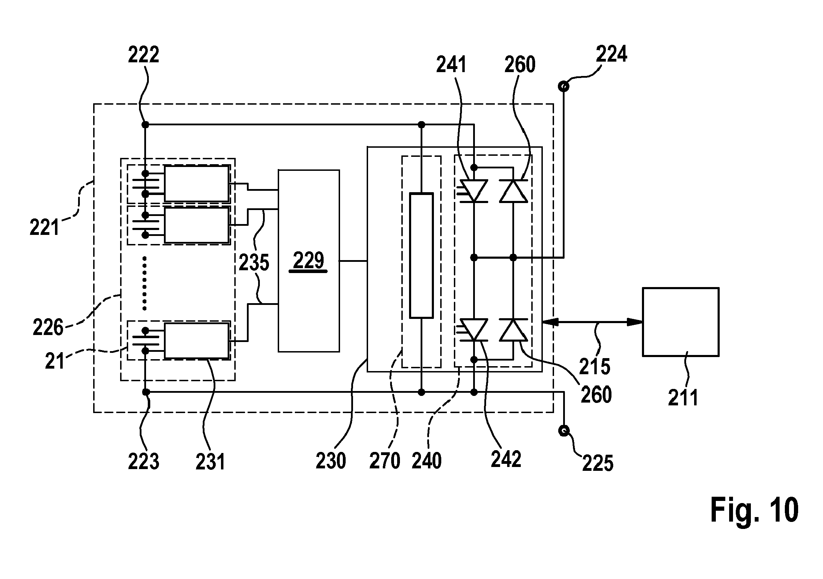

In der Figur 10 ist das Prinzipschaltbild eines Batteriemoduls nach noch einer anderen Ausführungsform der Erfindung gezeigt. Im Unterschied zu der Ausführungsform nach Figur 9 sind die Batteriezell-eigenen Zellüberwachungselektroniken 231 hier jeweils über einen eigenen, das heißt separaten Kommunikationsbus mit der zentralen Zellüberwachungselektronik 229 verbunden, die hierzu ausgangsseitig eine entsprechend höhere Zahl an Schnittstellen aufweist.

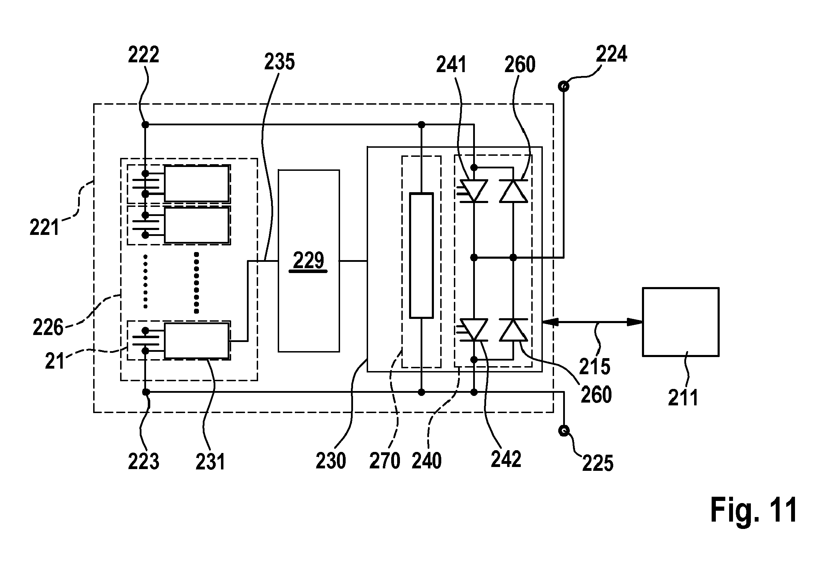

Die Figur 11 zeigt das Prinzipschaltbild eines Batteriemoduls 221 nach noch einer anderen Ausführungsform der Erfindung, wobei gemäß dieser

Ausführungsform eine Kommunikationsverbindung 235 zwischen einer Batteriezell-eigenen Zellüberwachungselektronik 231 und der zentralen Zellüberwachungselektronik 229 vorhanden ist, so dass die zentrale Zellüberwachungselektronik 229 lediglich mit einer einzigen der Zellüberwachungselektroniken 231 direkt kommuniziert. Die Batteriezell-eigenen Zellüberwachungselektroniken 231 kommunizierten untereinander beispielsweise über eine Daisy-Chain, so dass alle relevanten Batteriezell-Daten zunächst über die Daisy-Chain und dann über die Kommunikationsverbindung, die in den Figuren mit dem Bezugszeichen 235 bezeichnet ist, übertragen werden.

Die Erfindung ist nicht auf solche Batteriezell-eigene Zellüberwachungselektroniken 231 beschränkt, die innerhalb einer jeweiligen Batteriezelle 21 angeordnet sind. Alternativ ist denkbar, dass für jede Batteriezelle 21 eine entsprechende separate Zellüberwachungselektronik 231 außerhalb der Batteriezelle 21 angeordnet und mit der Batteriezelle 21 verschaltet ist, wobei optional eine zentrale (Haupt-)Zellüberwachungselektronik 229 vorhanden sein kann.

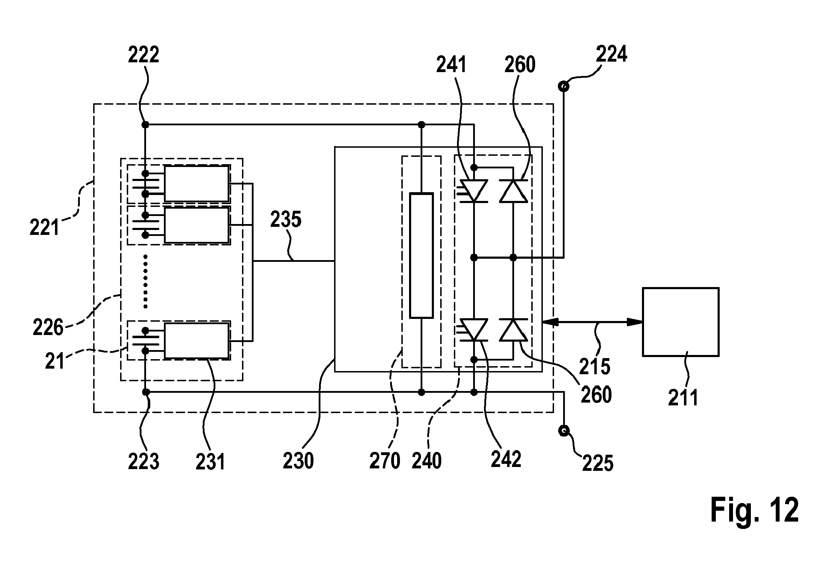

Die Figuren 12 bis 14 zeigen weitere Ausführungsformen der Erfindung, wobei bei diesen Ausführungsformen die Überwachungs- und Ansteuerungseinheit 230 direkt mit den Batteriezell-eigenen Zellüberwachungselektroniken 231 verbunden ist, ohne dass dazu eine zentrale Zellüberwachungselektronik 229 vorhanden ist. Somit werden manche Zellüberwachungsaufgaben direkt in/auf den Batteriezellen 21 ausgeführt, wobei ermittelte Messergebnisse und Ausgaben der Zellüberwachungselektroniken 231 unmittelbar an die Überwachungs- und Ansteuerungseinheit 230 kommuniziert werden.

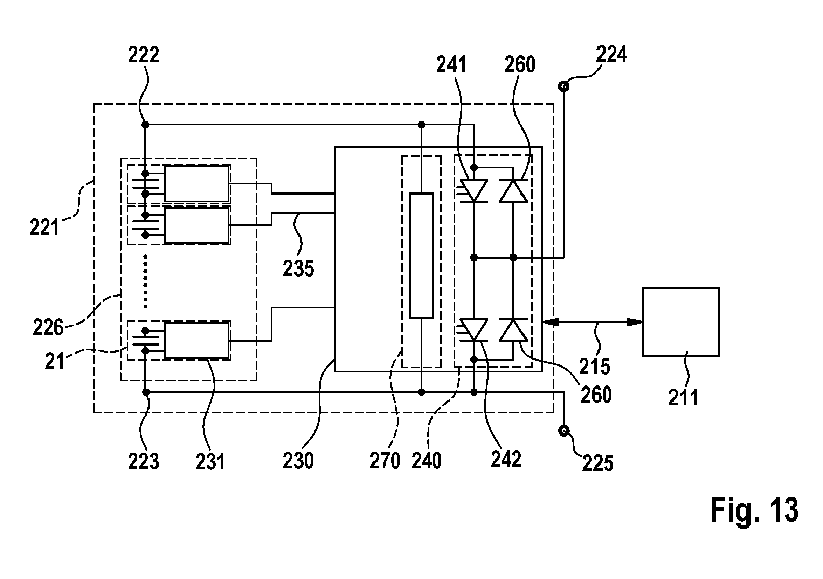

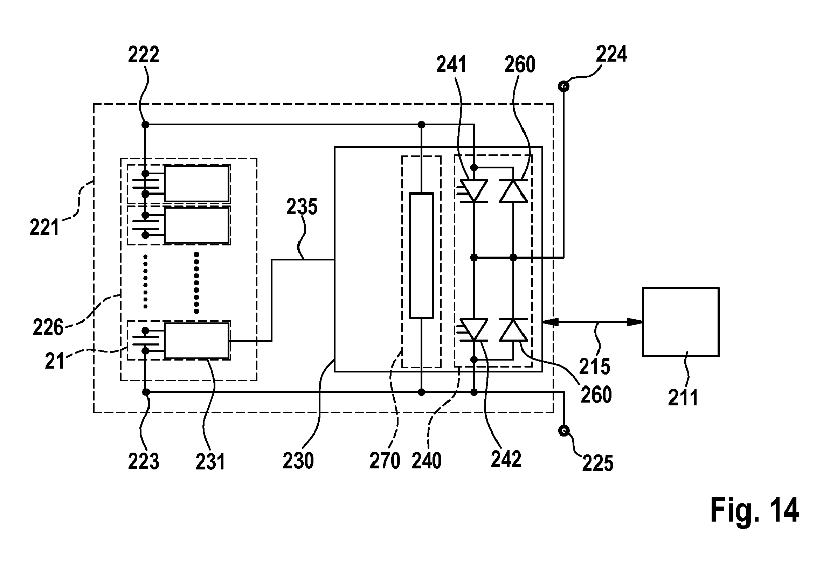

Die Kommunikation 235 zwischen der Überwachungs- und Ansteuerungseinheit 230 und den Zellüberwachungselektroniken231 erfolgt dabei ähnlich wie bei den Ausführungsformen, die weiter oben in Verbindung mit den Figuren 9 bis 11 diskutiert wurden, mit dem Unterschied, dass der oder die entsprechenden Kommunikationsbusse an die Überwachungs- und Ansteuerungseinheit 230 und nicht an eine zentrale Zellüberwachungseinheit angeschlossen sind. So zeigt Figur 12 eine Ausführungsform der Erfindung, bei der die Überwachungs- und Ansteuerungseinheit 230 über einen Bus mit den Zellüberwachungselektroniken 231 verbunden ist, und in Figur 13 sind mehrere Kommunikationsverbindungen bzw. Busse zwischen der Überwachungs- und Ansteuerungseinheit 230 einerseits und den jeweiligen Zellüberwachungselektroniken 231 andererseits vorhanden. Ferner zeigt Figur 14 ein Ausführungsbeispiel, bei denen die Zellüberwachungselektroniken 231 untereinander kommunizieren, wobei eine von den Zellüberwachungselektroniken 231 mit der Überwachungs- und Ansteuerungseinheit 230 verbunden ist.

Wie der Fachmann erkennt, können unterschiedliche Kombinationen von einer zentralen Zellüberwachungselektronik 229 und Batteriezell-eigenen Zellüberwachungselektroniken 231 in einem Batteriemodul 221, das eine Überwachungs- und Ansteuerungseinheit 230 mit der erfindungsgemäßen Entladevorrichtung 270 aufweist, angeordnet werden. Beispiele dafür wurden insbesondere weiter oben in Zusammenhang mit den Figuren 8 bis 14 diskutiert. So sind auch die in den Figuren 4 und 5 gezeigten Batteriemodule 221 nicht auf die dort darstellte beispielhafte Topologie beschränkt. Vielmehr kann die Topologie der in den Figuren 4 bis 5 gezeigten Batteriemodule 221 analog auch wie die in den Figuren 9 bis 14 gezeigten Schaltungstopologien aufgebaut sein. Mit anderen Worten, obgleich nach den Figuren 4 und 5 die Verschaltungstopologie für die Kommunikation 235 zwischen der Überwachungs- und Ansteuerungseinheit 230 und der Zellüberwachungselektronik 228, 229 der in Figur 8 gezeigten Topologie entspricht, kann bei anderen Ausführungsbeispielen die Verschaltungstopologie auch den in den Figur 9 bis 14 gezeigten Topologien entsprechen, wobei diese alternativen Ausführungsformen an dieser Stelle der Kürze halber nicht separat dargestellt werden.

Die hier vorgestellten erfindungsgemäßen Batteriemodule 221 sind nicht auf Lithium-lonen-Batteriezellen beschränkt. Sie können vielmehr auch andere Batteriezelltechnologien, wie beispielsweise für Nickel-Metallhybrid-Batteriezellen, umfassen.

Bei den hier dargestellten erfindungsgemäßen eigensicheren Batteriemodulen 221 mit umpolbarer Ausgangsspannung können die bisher eingesetzten Überladesicherheitsvorrichtungen (Overcharge Safety Devices (OSDs) und die Batteriezellsicherung (Cell Fuses) entfallen. Die zur Erhöhung der Sicherheit bei mechanischer Deformierung oder Penetration eingesetzten Maßnahmen, wie beispielsweise das Einrichten eines Batteriemoduls mit einer integrierten Nadeleindringsicherheitsvorrichtung können entweder ebenfalls entfallen oder zumindest wesentlich einfacher ausgeführt werden. Mit den hier vorgestellten erfindungsgemäßen Batteriemodulen 221 können Batteriesysteme aufgebaut werden, an dessen Batteriemanagementsysteme 211 wesentlich geringere Anforderungen als an den aus dem Stand der Technik bekannten Batteriesysteme gestellt werden. Die Elektronik der Batteriemanagementsysteme 211 kann daher voraussichtlich lediglich mit den üblichen Qualitätssicherungsmaßnahmen (ASIL-Einstufung QM) entwickelt werden und muss nicht ASIL C erfüllen. Die Sicherheit der Batteriesysteme kann gegenüber dem heutigen Stand der Technik erheblich verbessert werden.

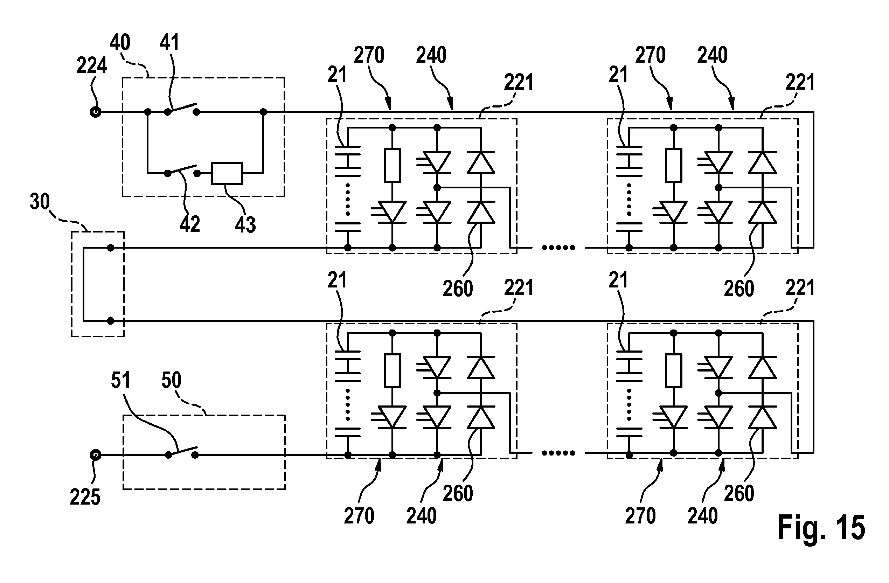

In der Figur 15 wird die Struktur einer Batterie mit einer beispielhaften Ausführungsform des erfindungsgemäßen Batteriemoduls 221 gezeigt. Wie aus der Figur 15 ersichtlich, weist jedes Batteriemodul 221 der dort gezeigten Batterie eine Entladeschaltung 270 und eine Koppeleinheit mit einer Halbbrücke 240 auf. Der Einfachheit der Darstellung halber wurde auf die explizite Darstellung der in jedem Batteriemodul 221 angeordneten Überwachungs- und Ansteuerungseinheit 230 verzichtet.

Aufgrund der Funktionalität der hier vorgestellten erfindungsgemäßen Batteriemodule 221, die Batteriemodulspannung umzupolen, eignen sich die erfindungsgemäßen Batteriemodule 221 insbesondere für den Einsatz in Batteriedirektinvertern 210 mit stufig einstellbaren Ausgangsspannungen.

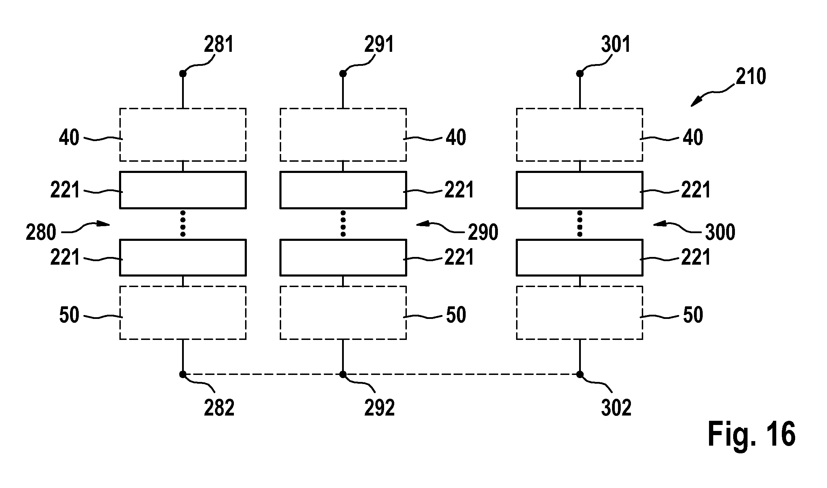

Ein Beispiel für den Einsatz der hier vorgestellten erfindungsgemäßen elektrisch eigensicheren Batteriemodule 221 ist der in der Figur 16 dargestellte Batteriedirektinverter 210. Der in der Figur 16 dargestellte Batteriedirektinverter 210 ist ein dreiphasiges Batteriesystem mit einer stufig einstellbaren Ausgangsspannung. Der Batteriedirektinverter 210 umfasst drei Batteriestränge 280, 290, 300, die jeweils eine Reihenschaltung aus mehreren erfindungsgemäßen Batteriemodulen 221 aufweisen. Diese Reihenschaltungen der Batteriestränge 280, 290, 300 sind mit den positiven Batteriestrangpolen 281, 291, 301 jeweils über eine Lade- und Trenneinrichtung 40 und mit den negativen Batteriestrangpolen 282, 292, 302 jeweils über eine Trenneinrichtung 50 verbunden.

Erfindungsgemäß werden die Batteriezellen oder Batteriemodule dabei derart angesteuert, dass sich deren Betriebsparameter innerhalb der jeweiligen Grenzwerte befinden, die für einen sicheren Betrieb notwendig sind.

So werden Lithium-lonen-Batteriezellen typischerweise innerhalb eines Spannungsbereichs Umin bis Umax von 2,8 V bis 4,2 V, oder bevorzugt 3,0 V bis 4,2 V Volt betrieben. Dies gilt insbesondere für sicherheitsrelevante für Werte Umin_safety oder Umax_safety. Diese Angaben gelten jedoch für die zu messenden Spannungen U Batteriezelle im Leerlauf, das heißt, wenn kein Strom durch die Batteriezelle fließt. Dabei sind diese Grenzwerte unbedingt zu beachten, da ansonsten die Elektroden Beschädigungen erleiden können.

Die Leerlaufspannung der Batteriezellen hängt im Wesentlichen von deren Ladezustand ab. Dabei wird typischerweise bei einer Spannung UBatteriezelle von 2,8 V ein Ladezustand SOC von 0%, bei 3,5 V ein Ladezustand von 20%, und bei 4,2 V ein Ladezustand von 100% angenommen, wobei diese Werte jeweils von Art und Material der Kathode, der Anode, und/oder des verwendeten Elektrolyts abhängen.

Wenn ein Strom durch eine Batteriezelle fließt, können die Batteriezellspannungen UBatteriezelle von den obigen Zahlenangaben abweichen. Angenommen, die Leerlaufspannung betrage 3,5 V, und der Innenwiderstand der Batteriezelle bei 25 °C sei 10 mΩ. Bei einem Ladestrom von 100 A ergäbe das dann einen zu messenden Spannungswert UBatteriezelle von 3,5 V + 1,0 V = 4,5 V. Bei einer Temperatur von 0 °C beträgt der Innenwiderstand der Batteriezelle beispielhaft jedoch bis zu 50 mΩ, was bei einem beispielhaften Entladestrom von 50 A einen Spannungswert UBatteriezelle von 3,5 V minus 2,5 V = 1,0 V ergäbe. Aufgrund der angewandten Ansteuerung und der verwendeten Sensoren werden diese Spannungswerte bei Raumtemperatur beziehungsweise bei 0°C aber nicht erreicht. Allgemein können im Betrieb der Batteriezellen der Wert für Umax zwischen 4,2 V und 5,0 V liegen und der Wert für Umin zwischen 1,5 V und 4,2 V, vorzugsweise zwischen 1,8 V und 4,15 V, diese Werte beziehen sich jedoch nicht auf die Leerlaufspannung.

Die obigen Spannungswerte gelten für eine einzelne Batteriezelle. Für ein Batteriemodul kommt es darauf an, wie viele Zellen in Reihe oder parallel geschaltet sind. So liegt die zulässige Modul-Leerlaufspannung UBatteriemodul zwischen n x 2,8 V bis n x 4,2 V, wobei n für die Anzahl der Batteriezellen steht, die miteinander in Reihe geschaltet sind.

Grenzwerte für Temperaturen bei Lithium-lonen-Batteriezellen liegen etwa bei Tmin = -40 °C und Tmax = 30°C bis 50 °C, bevorzugt 30°C bis 45 °C, am meisten bevorzugt 35°C bis 40°C. Aus Sicherheitsaspekten sollte eine maximale Temperatur Tmax-safety von 46°C bis 80°C, bevorzugt 50°C bis 60°C nicht überschritten werden. Ferner sollte die maximale Außentemperatur Taußen, bei der die Batteriezellen betrieben werden, 40 °C nicht übersteigen.

Die Batterieströme durch die Batteriezellen sollten nicht außerhalb eines Bereichs von -1000 A bis +1000 A, bevorzugt -600 A bis +600 A, noch mehr bevorzugt -500 A bis +500 A, noch mehr bevorzugt -450 A bis +450 A, und noch mehr bevorzugt -350 A bis +350 A, liegen.

Der Innendruck einer Batteriezelle sollte den Druckbereich von 2 bar bis 8 bar, bevorzugt 3 bar bis 7 bar, nicht verlassen.

Die obige Diskussion wurde beispielhaft für Lithium-lonen-Batteriezellen beziehungsweise Lithium-Ionen-Batteriemodule geführt, wobei die angegebenen Werte insbesondere für Lithium-lonen-Batteriezellen mit Lithium-Mangan-KobaltOxid als Aktivmaterial für die Kathode gelten. Jedoch ist die Erfindung jedoch nicht auf solche Batteriezellen, insbesondere nicht auf Lithium-lonen-Batteriezellen beschränkt. In der Praxis hängen die Zahlenwerte der zu wählenden Betriebsparameter somit vom jeweiligen Batteriezelltyp ab.

Neben der voranstehenden schriftlichen Offenbarung wird hiermit zur weiteren Offenbarung der Erfindung ergänzend auf die Darstellung in den Figuren 1 bis 16 Bezug genommen.

## Patentansprüche

1. Batteriemodul (221) mit einer Batteriezellschaltung (226) mit mehreren Batteriezellen (21) und mit einer Überwachungs- und Ansteuerungseinheit (230) zur Überwachung des Funktionszustands des Batteriemoduls (221), **dadurch gekennzeichnet, dass** das Batteriemodul (221) eine Koppeleinheit mit in Halbbrückenanordnung geschalteten Leistungshalbleitern (241, 242) zum Koppeln der Batteriezellschaltung (226) an Ausgangsterminals (224, 225) des Batteriemoduls (221) und eine mit der Batteriezellschaltung (226) gekoppelte Entladeschaltung (270) zum schnellen Entladen des Batteriemoduls (221) umfasst, wobei die Leistungshalbleiter (241, 242) durch die Überwachungs- und Ansteuerungseinheit (230) ansteuerbar sind.

2. Batteriemodul (221) nach Anspruch 1, wobei die Überwachungs- und Ansteuerungseinheit (230) ausgebildet ist, eine Batteriezellspannung und/oder Batteriemodulspannung und/oder einen durch das Batteriemodul (221) fließenden Strom zu überwachen und bei Vorliegen einer Batteriezellspannung oder Batteriemodulspannung, deren Betrag einen ersten Spannungsgrenzwert überschreitet, und/oder bei Vorliegen einer Batteriezellspannung oder Batteriemodulspannung, deren Betrag einen zweiten Spannungsgrenzwert unterschreitet, und/oder bei Vorliegen eines Ladestroms, dessen Betrag einen vorbestimmten Ladestromgrenzwert überschreitet, und/oder bei Vorliegen eines Entladestroms, dessen Betrag einen vorbestimmten Entladestromgrenzwert überschreitet, die Leistungshalbleiter (241, 242) der Koppeleinheit in einen Schaltzustand zu versetzen, bei dem durch das Batteriemodul (221) kein Strom fließt.

3. Batteriemodul (221) nach einem der vorangehenden Ansprüche, wobei die Überwachungs- und Ansteuerungseinheit (230) ausgebildet ist, das Vorliegen einer Gefahrsituation anhand von insbesondere durch ein Batteriemanagementsystem kommunizierter Information und/oder einer Auswertung einer gemessenen Zelltemperatur oder Batteriemodultemperatur, insbesondere bei einer einen vorbestimmten Temperaturgrenzwert überschreitenden Zelltemperatur oder Batteriemodultemperatur, und/oder einer Auswertung der Batteriemodulspannung, insbesondere bei einem Spannungseinbruch der Batteriemodulspannung, zu erkennen und bei Vorliegen der Gefahrsituation die Entladeschaltung (270) zum schnellen Entladen des Batteriemoduls (221) zu aktivieren.

4. Batteriemodul (221) nach Anspruch 3, wobei die Entladeschaltung (270) eine Serienschaltung mit einem Widerstand (272) und einem Leistungshalbleiter (271), insbesondere mit einem Thyristor und/oder einer Abtaktschaltung mit einem Abtaktschalter und einem Abtaktwiderstand, umfasst und dazu eingerichtet ist, im aktivierten Zustand das Batteriemodul (221) mittels einem vorbestimmten Entladestrom oder einem durch Ansteuerung der Entladeschaltung (270) mittels der Überwachungs- und Ansteuerungseinheit (230) steuerbaren Entladestrom zu entladen.

5. Batteriemodul (221) nach einem der vorangehenden Ansprüche, wobei die Koppeleinheit zwei Halbbrücken aufweist, die jeweils einen mit einem Pluspol (222) der Batteriezellschaltung (226) gekoppelten ersten Leistungshalbleiter (241, 251), einen mit einem Minuspol (223) der Batteriezellschaltung (226) gekoppelten zweiten Leistungshalbleiter (242, 252) und einen Mittelanschluss umfassen und über den jeweiligen Mittelanschluss mit einem jeweils anderen Ausgangsterminal (224, 225) der Batteriemodul (221) verbunden sind, wobei das Batteriemodul (21) eingerichtet ist, in einem Normalbetrieb die Koppeleinheit mittels Ansteuerung durch die Überwachungs- und Ansteuerungseinheit (230) derartig zu betreiben, dass wahlweise eine Batteriemodulspannung in positiver oder negativer Orientierung oder keine Batteriemodulspannung an den Ausgangsterminals (224, 225) des Batteriemoduls (221) anliegt.

6. Verfahren zum Überwachen eines Batteriemoduls (221) mit einer Batteriezellschaltung (226) aus mehreren Batteriezellen (21) mittels einer in dem Batteriemodul (221) angeordneten Überwachungs- und Ansteuerungseinheit (230), **dadurch gekennzeichnet, dass** das Batteriemodul (221) mittels einer Koppeleinheit betrieben wird, die in Halbbrückenanordnung geschaltete Leistungshalbleiter (241, 242) zum Koppeln der Batteriezellschaltung (226) an Ausgangsterminals (224, 255) des Batteriemoduls (221) umfasst, wobei wenn durch die Überwachungs- und Ansteuerungseinheit (230) eine Fehlersituation oder Gefahrsituation des Batteriemoduls (226) feststellt wird, die Batteriezellschaltung (226) mittels der Koppeleinheit und/oder mittels einer mit der Batteriezellschaltung (226) gekoppelten Entladeschaltung (270), die zum schnellen Entladen des Batteriemoduls (226) vorgesehen ist, in einen sicheren Zustand versetzt wird.

7. Verfahren nach Anspruch 6, wobei das Batteriemodul (221) durch Entladen in den sicheren Zustand versetzt wird, indem die Koppeleinheit so gesteuert wird, dass in der Halbbrücke (240, 250) ein Leistungshalbleiter (241, 242) eingeschaltet und der andere Leistungshalbleiter (241, 242) in einem aktiven Betrieb als steuerbarer Widerstand betrieben wird, und/oder das Batteriemodul (226) mittels der Entladeschaltung (270) mit einem durch die Entladeschaltung (270) fließenden Entladestrom, der einem vorbestimmten Bruchteil eines Kurzschlussstroms des Batteriemoduls (221) entspricht, entladen wird,

8. Verfahren nach Anspruch 6 oder 7, wobei das Batteriemodul (221) in den sicheren Zustand versetzt wird, indem ein erster Leistungshalbleiter (241, 251) der Halbbrücke (240, 250) eingeschaltet wird, so dass ein erstes Ausgangsterminal und ein zweites Ausgangsterminal des Batteriemoduls (221) leitend verbunden werden, und ein zweiter Leistungshalbleiter (242, 252) derselben Halbbrücke (240, 250) ausgeschaltet wird, oder, bei Verwendung einer Koppeleinheit aus zwei Halbbrücken (240, 250), jeweils zwei mit dem ersten Ausgangsterminal (224) verbundene Leistungshalbleiter (241,251) oder zwei mit dem zweiten Ausgangsterminal (225) verbundene Leistungshalbleiter (242, 252) eingeschaltet werden.

9. Batteriesystem (210), **gekennzeichnet dadurch, dass** das Batteriesystem (210) eine Batterie mit mindestens einem Batteriestrang (280, 290, 300), in dem mehrere Batteriemodule (221) nach einem der Ansprüche 1 bis 5 angeordnet sind, und ein Batteriemanagementsystem (211) umfasst, wobei das Batteriemanagementsystem (211) dazu ausgebildet ist, mit den Überwachungs- und Ansteuerungseinheiten (230) der Batteriemodule (221) zu kommunizieren.

10. Kraftfahrzeug mit eine Elektromotor und einer Traktionsbatterie zur Versorgung des Elektromotors, die eine Batteriemodul (221) nach einem der Ansprüche 1 bis 5 oder das Batteriesystem (210) nach Anspruch 9 umfasst.
